# EUROPEAN PATENT SPECIFICATION

(11) **EP 4 458 509 B1**
(45) Date of publication and mention of the grant of the patent: **19.08.2026**
(21) Application number: 22946726.1
(22) Date of filing: 13.06.2022
(51) Int. Cl.: B23Q 5/04, B23K 20/12, B23Q 17/09, B23Q 1/00

(54) **MACHINE TOOL AND WORKPIECE MACHINING METHOD**
WERKZEUGMASCHINE UND WERKSTÜCKBEARBEITUNGSVERFAHREN
MACHINE-OUTIL ET PROCÉDÉ D'USINAGE DE PIÈCE

(43) Date of publication of application: 06.11.2024
(73) Proprietor: Yamazaki Mazak Corporation, Niwa-gun, Aichi 480-0197 (JP)
(72) Inventor: YOSHIDA, Seiichi, Niwa-gun, Aichi 480-0197 (JP); HATTORI, Atsushi, Niwa-gun, Aichi 480-0197 (JP); FUJIWARA, Yoshihiko, Niwa-gun, Aichi 480-0197 (JP)
(74) Representative: TBK
(86) International application number: PCT/JP2022/023633
(87) International publication number: WO 2023/242906

(56) References cited:
- EP-A1- 2 837 463
- JP-A- 2002 540 974
- JP-A- 2003 159 628
- JP-A- 2003 266 265
- JP-A- 2007 229 878
- JP-A- 2019 063 867
- JP-A- H09 174 383

## Description

The present invention relates to a machine tool according to the preamble of claim 1, and a method of machining a workpiece.

### Background Art

A technique of machining a workpiece using a rotating tool is known.

As a related technique, JP 2019-063867 A discloses a friction stir welding tool. The friction stir welding tool recited in JP 2019-063867 A includes a head, a tool holder, and a body that is provided between the head and the tool holder and that is mounted on the head and the tool holder. The body includes a plurality of cooling fins, a pressure sensor, a temperature sensor, a torque sensor, and a communication node. The communication node electrically communicates with the pressure sensor, the temperature sensor, and the torque sensor, and wirelessly communicates with an arithmetic-logic operator.

JP 2007-229878 A discloses a generic machine tool according to the preamble of claim 1, comprising: a rotation device comprising a rotation body rotatable about a first axis; a tool holder attachable to the rotation body; and a power feeder configured to supply power to the tool holder. The tool holder comprises a power receiver provided in an outer circumferential edge region of the tool holder, and at least one sensor electrically connected to the power receiver. The power feeder comprises a power feeding part configured to supply the power to the power receiver, and a first mover configured to move the power feeding part between a power feeding position facing the power receiver and a retracted position spaced further apart from the power receiver than the power feeding position.

EP 2 837 463 A1 also discloses a similar machine tool configuration comprising a machine tool, a rotation device tool holder, a power receiver and a sensor. There is also provided a moveable power feeding part which is displaceable by a first mover means.

### Summary of Invention

It is the object of the present invention to further develop a machine tool according to the preamble of claim 1; and to provide a method of machining a workpiece using a tool held by a tool holder, by which a stable and safe state communication between the tool holder and the machine tool can be provided.

The object of the present invention is achieved by a machine tool having the features of claim 1; and a method of machining a workpiece using a tool held by a tool holder, having the features of claim 10.

Further advantageous developments according to the present invention are defined in the dependent claims.

It is an advantage of the present invention to provide: a machine tool including a tool holder to which power is easily supplied from outside; and a method of machining a workpiece using a tool held by a tool holder to which power is easily supplied from outside.

### Brief Description of Drawings

[FIG. 1] FIG. 1 is a front view of a part of a machine tool according to the first embodiment, schematically illustrating the part of the machine tool.
[FIG. 2] FIG. 2 is a cross-sectional view schematically illustrating a state in which power is being supplied from a power feeding part to a power receiver of a tool holder.
[FIG. 3] FIG. 3 is a schematic illustrating an example arrangement of the power receiver and the power feeding part.
[FIG. 4] FIG. 4 is a front view of a part of the machine tool according to the first embodiment, schematically illustrating the part of the machine tool.
[FIG. 5] FIG. 5 is a cross-sectional view schematically illustrating a case where a tool held by the tool holder is a friction stir welding tool.
[FIG. 6] FIG. 6 is a front view of a part of the machine tool according to the first embodiment, schematically illustrating the part of the machine tool.
[FIG. 7] FIG. 7 is a front view of a part of the machine tool according to the first embodiment, schematically illustrating the part of the machine tool.
[FIG. 8] FIG. 8 is a front view of a part of the machine tool according to the first embodiment, schematically illustrating the part of the machine tool.
[FIG. 9] FIG. 9 is a perspective view of a part of the machine tool according to the first embodiment, schematically illustrating the part of the machine tool.
[FIG. 10] FIG. 10 is a schematic perspective view of the machine tool according to the first embodiment.
[FIG. 11] FIG. 11 is a schematic perspective view of the machine tool according to the first embodiment.
[FIG. 12] FIG. 12 is a schematic bottom view of the machine tool according to the first embodiment.
[FIG. 13] FIG. 13 is a schematic bottom view of the machine tool according to the first embodiment.
[FIG. 14] FIG. 14 is a schematic perspective view of a part of a stocker.
[FIG. 15] FIG. 15 is a schematic side view of a part of the stocker.
[FIG. 16] FIG. 16 is a schematic front view of an example of the tool holder.
[FIG. 17] FIG. 17 is a cross-sectional view schematically illustrating a state in which power is being supplied from the power feeding part to the power receiver of the tool holder.
[FIG. 18] FIG. 18 is a schematic front view of the machine tool according to the first embodiment.
[FIG. 19] FIG. 19 is a schematic front view of the machine tool according to the first embodiment.
[FIG. 20] FIG. 20 is a schematic front view of the machine tool according to the first embodiment.
[FIG. 21] FIG. 21 is a schematic front view of the machine tool according to the first embodiment.
[FIG. 22] FIG. 22 is a schematic front view of the machine tool according to the first embodiment.
[FIG. 23] FIG. 23 is a schematic front view of the machine tool according to the first embodiment.
[FIG. 24] FIG. 24 is a schematic front view of the machine tool according to the first embodiment.
[FIG. 25] FIG. 25 is a schematic front view of the machine tool according to the first embodiment.
[FIG. 26] FIG. 26 is a schematic front view of the machine tool according to the first embodiment.
[FIG. 27] FIG. 27 is a schematic front view of a machine tool according to a second embodiment.
[FIG. 28] FIG. 28 is a schematic front view of a part of the machine tool according to the second embodiment.
[FIG. 29] FIG. 29 is a schematic front view of a part of the machine tool according to the second embodiment.
[FIG. 30] FIG. 30 is a schematic cross-sectional view of a tool holder according to a third embodiment.
[FIG. 31] FIG. 31 is a flowchart of an example method according to an embodiment of machining a workpiece.
[FIG. 32] FIG. 32 is a flowchart of a plurality of example sub-steps included in a first workpiece machining step.
[FIG. 33] FIG. 33 is a flowchart of a plurality of example sub-steps included in a second workpiece machining step.

### Description of Embodiments

By referring to the accompanying drawings, description will be made with regard to a machine tool 1 according to an embodiment, a tool holder 2A according to the embodiment, and a method according to the embodiment of machining a workpiece. It is noted that in the following description of the embodiments, identical reference numerals are used to denote identical portions, members, or components having identical functions, and redundant description of identical portions, members, or components will be eliminated or minimized.

### (Definitions of Directions)

In this specification, the direction from a held part 21 of the tool holder 2A toward a tool holding part 22 of the tool holder 2A is defined as first direction *DR1,* and the direction opposite to the first direction *DR1* is defined as second direction *DR2*.

### (First Embodiment)

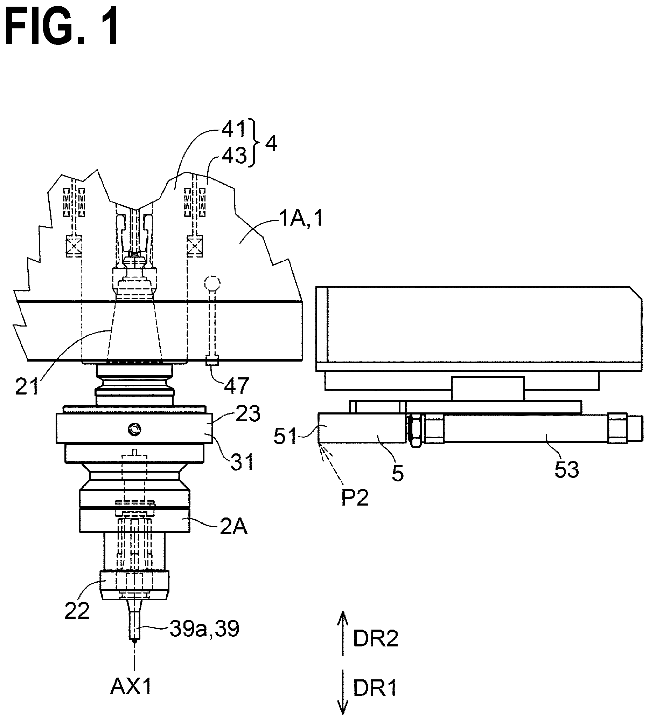

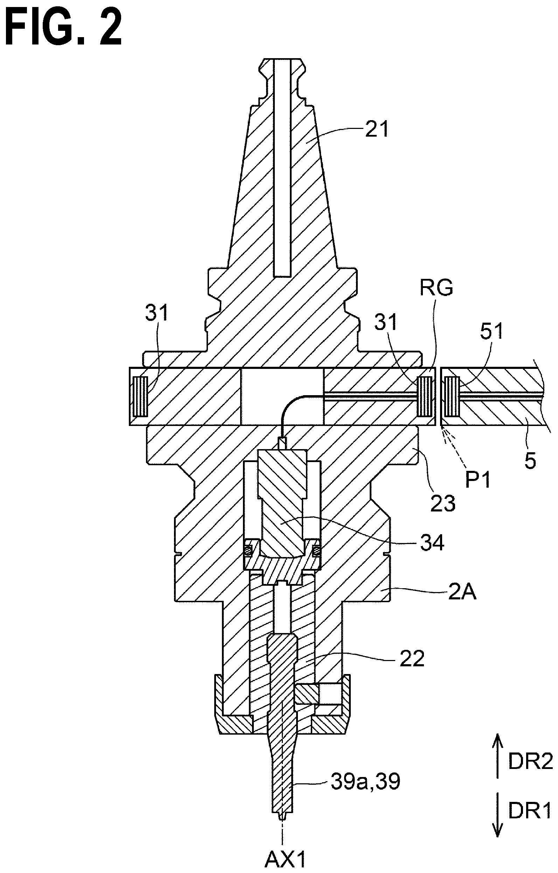

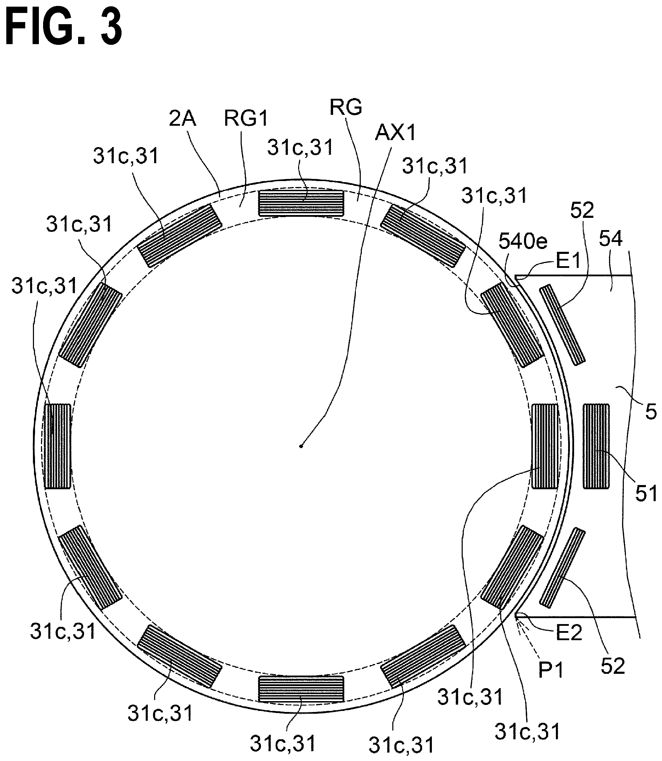

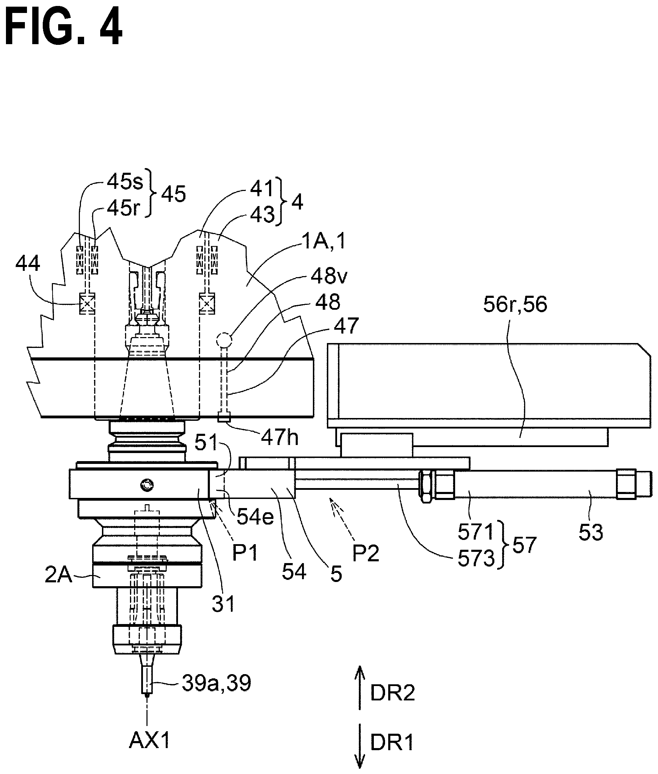

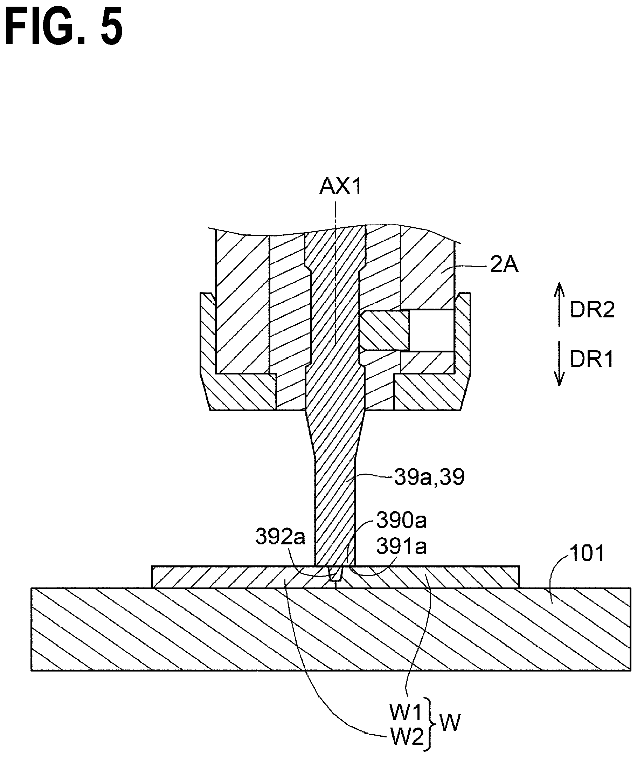

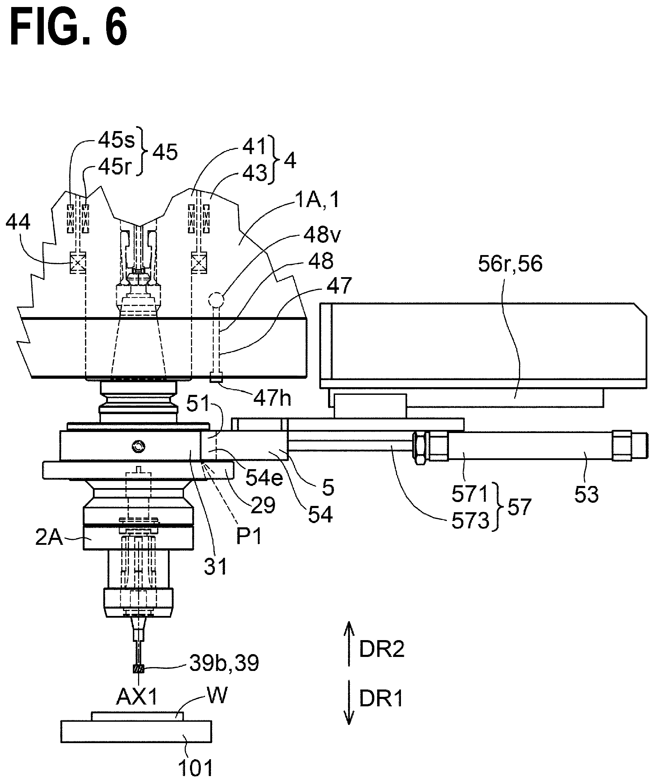

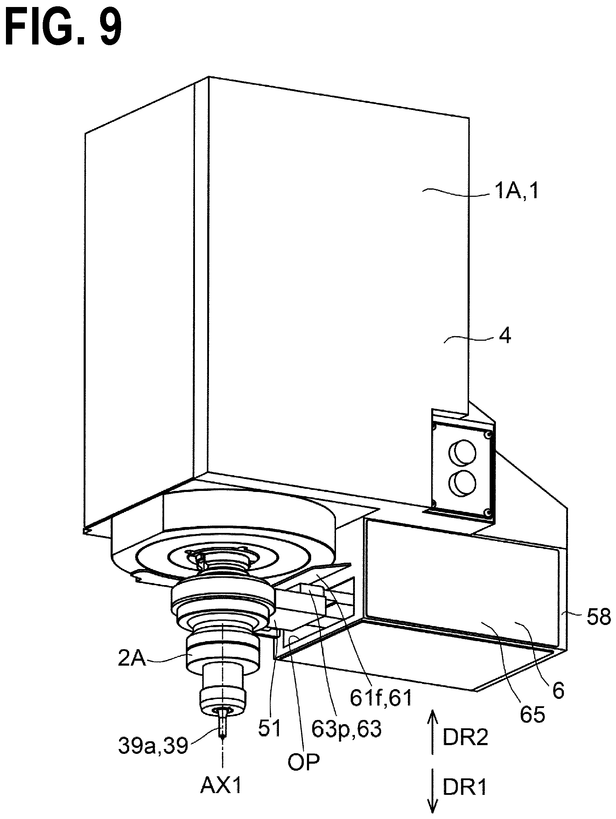

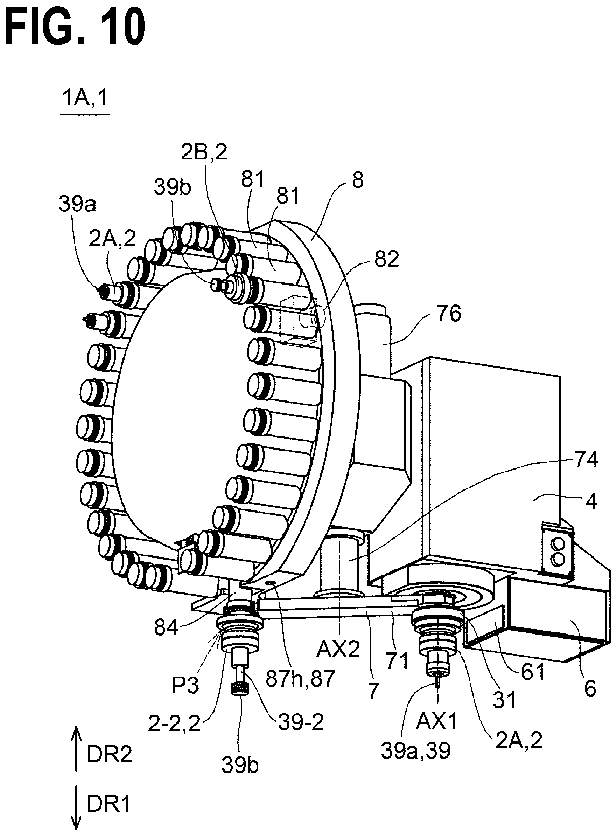

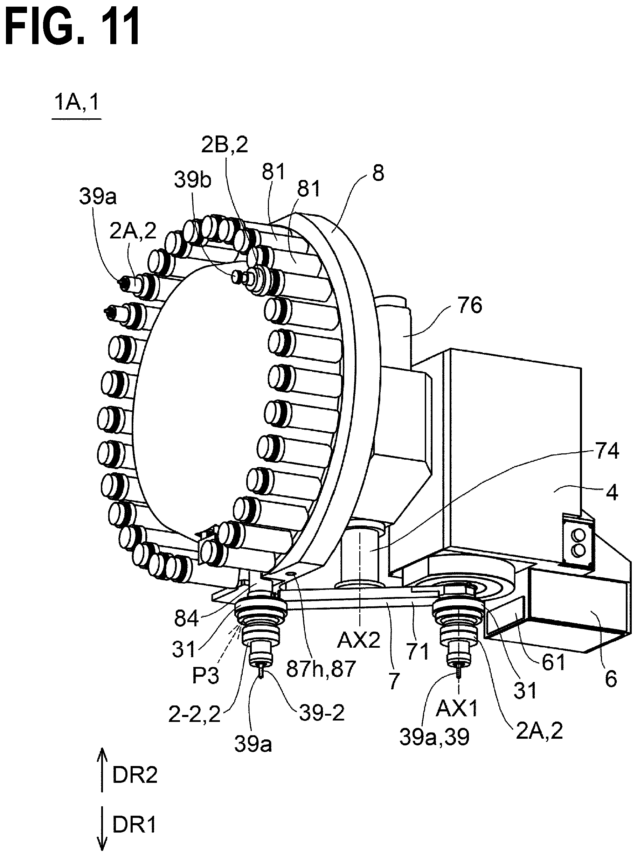

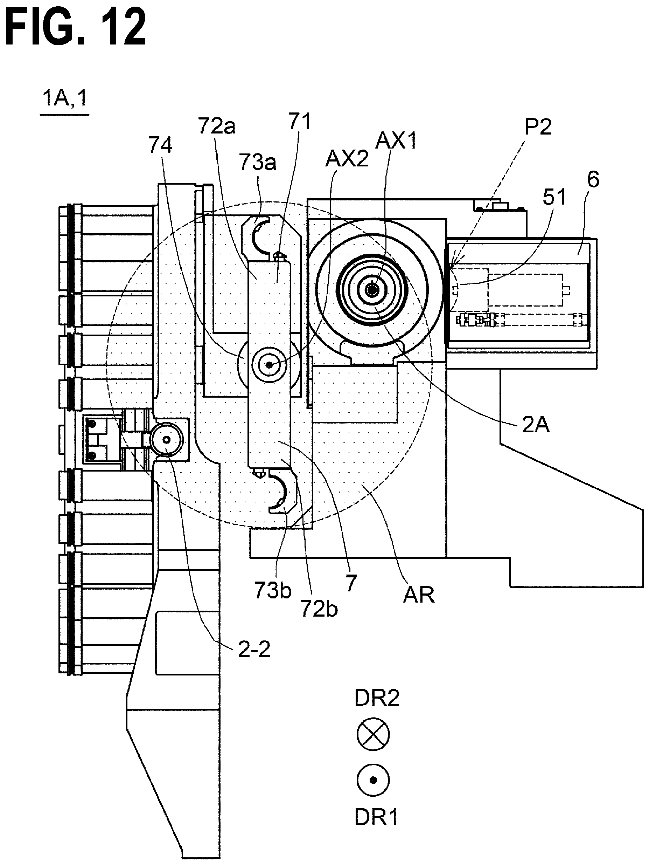

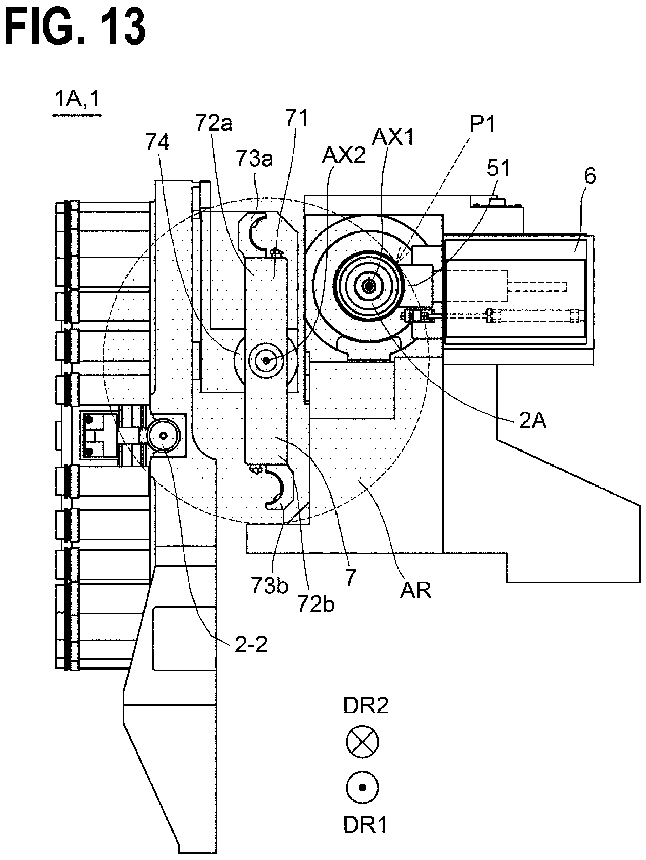

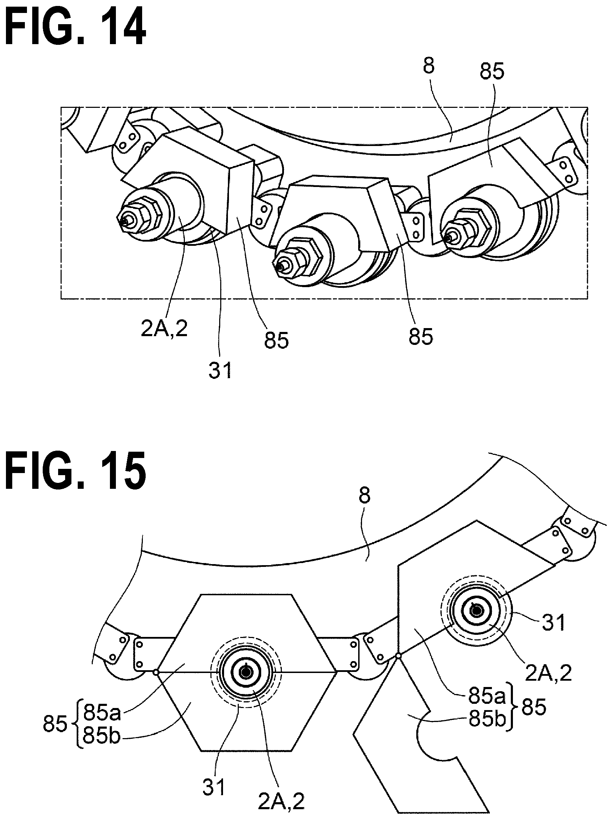

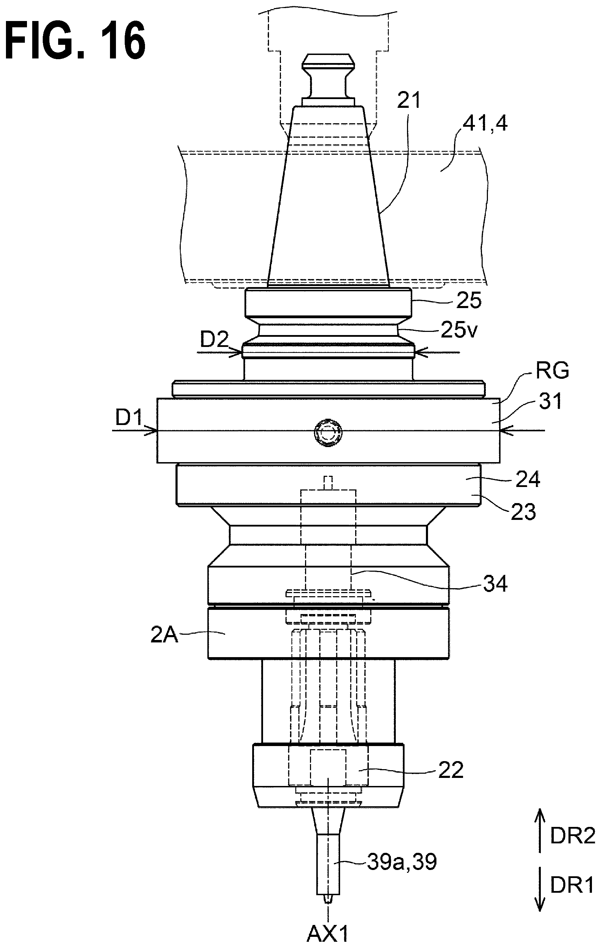

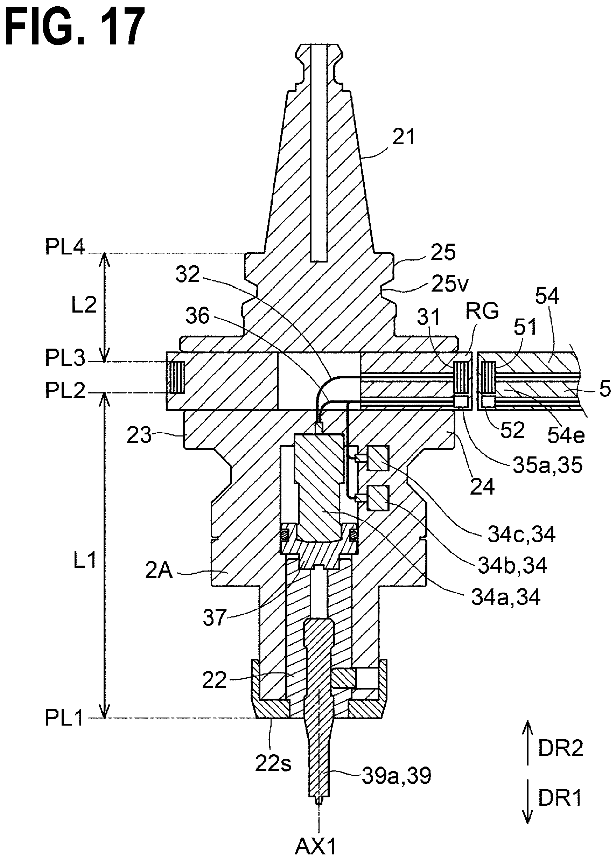

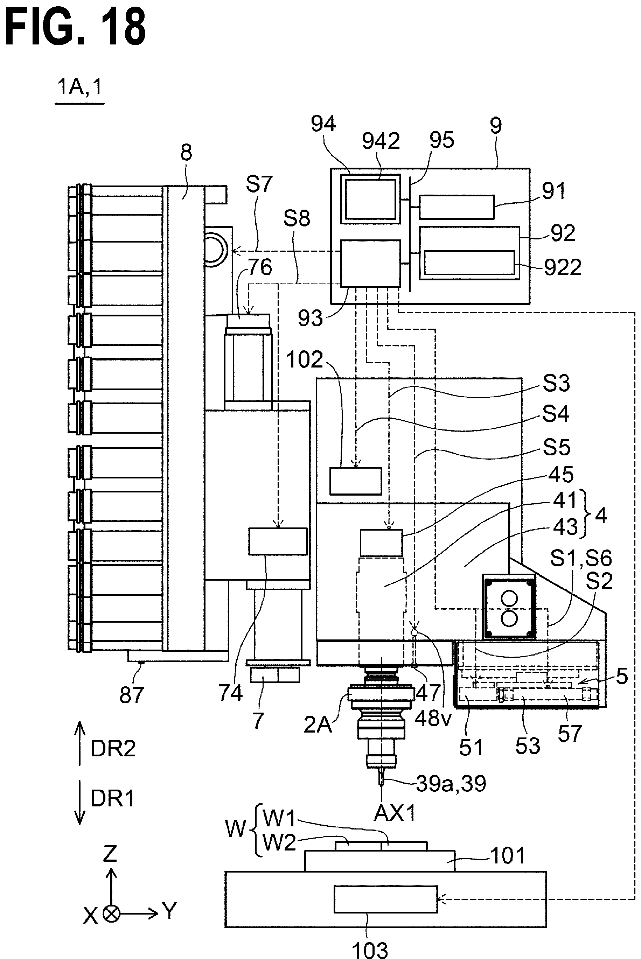

By referring to FIGs. 1 to 26, a machine tool 1A according to the first embodiment will be described. FIG. 1 is a schematic front view of a part of the machine tool 1A according to the first embodiment. FIG. 2 is a cross-sectional view schematically illustrating a state in which power is being supplied from a power feeding part 51 to a power receiver 31 of the tool holder 2A. FIG. 3 is a schematic illustrating an example arrangement of the power receiver 31 and the power feeding part 51. FIG. 4 is a schematic front view of a part of the machine tool 1A according to the first embodiment. FIG. 5 is a cross-sectional view schematically illustrating a case where a tool 39 held by the tool holder 2A is a friction stir welding tool 39a. FIGs. 6 to 8 each are a schematic front view of a part of the machine tool 1A according to the first embodiment. FIG. 9 is a schematic perspective view of a part of the machine tool 1A according to the first embodiment. FIGs. 10 and 11 are each a schematic perspective view of the machine tool 1A according to the first embodiment. FIGs. 12 and 13 are each a schematic bottom view of the machine tool 1A according to the first embodiment. FIG. 14 is a schematic perspective view of a part of a stocker 8. FIG. 15 is a schematic side view of a part of the stocker 8. FIG. 16 is a schematic front view of an example of the tool holder 2A. FIG. 17 is a cross-sectional view schematically illustrating a state in which power is being supplied from the power feeding part 51 to the power receiver 31 of the tool holder 2A. FIGs. 18 to 26 are each a schematic front view of the machine tool 1A according to the first embodiment.

As exemplified in FIG. 1, the machine tool 1A according to the first embodiment includes the tool holder 2A, a rotation device 4, and a power feeder 5.

The tool holder 2A is mounted on a rotation body 41 of the rotation device 4. The tool holder 2A holds the tool 39, which machines a workpiece. As exemplified in FIG. 2, the tool holder 2A includes the power receiver 31 and the at least one sensor 34.

The power receiver 31 receives power from the power feeder 5 (more specifically, the power feeding part 51 of the power feeder 5). As exemplified in FIG. 2, the power receiver 31 is provided at an outer circumferential edge region RG of the tool holder 2A. As exemplified in FIG. 3, the power receiver 31 is provided in a ring-shaped region RG1 and preferably along a circle centered around a first axis AX1. In this case, when the tool holder 2A rotates about the first axis AX1, power is supplied from the power feeding part 51 of the power feeder 5 to the power receiver 31 substantially without interruption. It is to be noted that in FIG. 3, the region defined by two circles indicated by broken lines corresponds to the ring-shaped region RG1, in which the power receiver 31 is provided.

As exemplified in FIG. 3, the power receiver 31 may include a plurality of power receiving coils 31c. In the example illustrated in FIG. 3, the plurality of power receiving coils 31c are provided in the ring-shaped region RG1 and along the circle centered around the first axis AX1.

As exemplified in FIG. 2, the at least one sensor 34 is electrically connected to the power receiver 31. The at least one sensor 34 is operated by the power received from the power receiver 31. In operation, the at least one sensor 34 detects a physical quantity indicating a state of the tool holder 2A.

In the example illustrated in FIG. 4, the rotation device 4 rotates the tool holder 2A about the first axis AX1. An example of the first axis AX1 is an axis perpendicular to a horizontal plane. The rotation device 4 preferably rotates the entire tool holder 2A about the first axis AX1. The rotation device 4 includes the rotation body 41. The rotation body 41 is rotatable about the first axis AX1. In a state in which the tool holder 2A is attached to the rotation body 41, the rotation body 41 rotates about the first axis AX1 together with the tool holder 2A. The rotation device 4 includes a support body 43, in addition to the rotation body 41. The support body 43 rotatably supports the rotation body 41.

The power feeder 5 supplies power to the tool holder 2A. The power feeder 5 includes the power feeding part 51 and a first mover 53.

The power feeding part 51 supplies power to the power receiver 31 of the tool holder 2A. The power feeding part 51 is a feeding coupler that supplies power to the power receiver 31. The power receiver 31 is a power receiving coupler that receives power from the power feeding part 51.

In the example illustrated in FIG. 4, the power feeding part 51 supplies power to the power receiver 31 by a non-contact method. Alternatively, the power feeding part 51 may supply power to the power receiver 31 by a contact method (more specifically, by a brush method).

The first mover 53 moves the power feeding part 51. More specifically, the first mover 53 moves the power feeding part 51 between a power feeding position P1 (see FIG. 4) and a retracted position P2 (see FIG. 1). At the power feeding position P1, the power feeding part 51 faces the power receiver 31. The retracted position P2 (see FIG. 1) is spaced further apart from the power receiver 31 than the power feeding position P1 is spaced apart from the power receiver 31.

It is to be noted that as exemplified in FIG. 3, in a state in which the power feeding part 51 is positioned at the power feeding position P1, the power feeding part 51 may not necessarily face all of the power receiver 31. In other words, in a state in which the power feeding part 51 is positioned at the power feeding position P1, it suffices that the power feeding part 51 faces a part of the power receiver 31.

In the machine tool 1A according to the first embodiment, power can be supplied to the tool holder 2A from outside the tool holder 2A. This eliminates the need for providing the tool holder 2A with a battery. This, in turn, eliminates the need for charging a battery for the tool holder 2A. Also in the machine tool 1A according to the first embodiment, the power receiver 31 is provided in the outer circumferential edge region RG of the tool holder 2A. This enables the power feeding part 51, which is provided outside the tool holder 2A, to easily approach the power receiver 31 of the tool holder 2A.

Also in the machine tool 1A according to the first embodiment, the position of the power feeding part 51 is changeable in position between the power feeding position P1, at which the power feeding part 51 faces the power receiver 31, and the retracted position P2, which is spaced further apart from the power receiver 31. When the power feeding part 51 is positioned at the power feeding position P1, at which the power feeding part 51 faces the power receiver 31, the power feeding part 51 is able to efficiently supply power to the power receiver 31. When the power feeding part 51 is positioned at the retracted position P2, the power feeding part 51 does not impede processes associated with the tool holder 2A, such as replacement the tool holder 2A.

In the machine tool 1A according to the first embodiment, the tool holder 2A, which needs external power feeding, and a tool holder that does not need external power feeding may be selectively attached to the rotation body 41 of the rotation device 4. In a case where a tool holder that does not need external power feeding is attached to the rotation body 41, the power feeding part 51 is kept at the retracted position P2. This eliminates or minimizes attachment of powdery chips and/or chips generated from the workpiece to the power feeding part 51 positioned at the retracted position P2.

### (Optional Configurations)

Next, by referring to FIGs. 1 to 26, optional configurations employable in the first embodiment will be described.

### (Tool Types)

In the example illustrated in FIG. 4, the tool 39 held by the tool holder 2A is the friction stir welding tool 39a. As exemplified in FIG. 5, the friction stir welding tool 39a includes a probe 392a, which is inserted in a workpiece W, and a shoulder 390a, which contacts a surface of the workpiece W. In the example illustrated in FIG. 5, a shoulder surface 391a of the shoulder 390a is in contact with a surface of a first workpiece W1 and a surface of the second workpiece W2. FIG. 4 illustrates an example of butting joining in which faces of the two workpieces are butted and joined together. Alternatively, in the first embodiment, the two workpieces may be joined together by superimpose joining, in which the two workpieces are superimposed on each other and joined together.

The friction stir welding tool 39a rotates about the first axis AX1 to soften a joining target portion of the first workpiece W1 and a joining target portion of the second workpiece W2 by friction heat. The material softened by the friction stir welding tool 39a is caused to flow around the tool by the rotation of the tool. The material flowing around the friction stir welding tool 39a is solidified to join the first workpiece W1 and the second workpiece W2 together.

In a case where the tool 39 is the friction stir welding tool 39a, no powdery chips and/or chips are generated from the workpiece W during friction stir welding, or a very small amount of powdery chips and/or chips are generated from the workpiece W during friction stir welding. This ensures a low possibility of powdery chips and/or chips adhering to the power feeding part 51 and the power receiver 31.

Alternatively, as exemplified in FIG. 6, the tool 39 may be a cutting tool 39b. The cutting tool 39b cuts the workpiece W. In a case where the tool 39 is the cutting tool 39b, there is a possibility that powdery chips and/or chips generated from the workpiece W adhere to the power feeding part 51 and/or the power receiver 31. In view of this possibility, in the example illustrated in FIG. 6, the tool holder 2A includes a flange 29 to prevent powdery chips and/or chips from adhering to the power receiver 31. The flange 29 is provided further at the leading end side than the power receiver 31 (in other words, at the first direction *DR1* side). The flange 29 is preferably a ring-shaped flange.

In the example illustrated in FIG. 6, when the power feeding part 51 is positioned at the power feeding position P1, the flange 29 is provided between the power feeding part 51 and the workpiece W. In other words, when the power feeding part 51 is positioned at the power feeding position P1, the power feeding part 51 is hidden behind the flange 29 in a view from a direction along the second direction *DR2.* In this case, the flange 29 prevents powdery chips and/or chips generated from the workpiece W from adhering to the power feeding part 51.

It is to be noted that the configuration of the flange 29 may be employed in the tool holder 2A that holds the friction stir welding tool 39a (see, for example, FIG. 4).

In the example illustrated in FIG. 4, the tool 39 held by the tool holder 2A is the friction stir welding tool 39a. In the example illustrated in FIG. 6, the tool 39 held by the tool holder 2A is the cutting tool 39b. Alternatively, the tool 39 held by the tool holder 2A may be a tool other than a friction stir welding tool and a cutting tool (for example, a measuring tool).

### (Held Part 21, Tool Holding Part 22, Exposed Part 23)

As exemplified in FIG. 1, the tool holder 2A may include the held part 21, the tool holding part 22, and an exposed part 23.

The held part 21 is a part held by the rotation body 41 of the rotation device 4. In other words, the held part 21 is held by the rotation body 41 of the rotation device 4.

The tool holding part 22 is a part that holds the tool 39. The tool 39 held by the tool holding part 22 may be the friction stir welding tool 39a, a cutting tool, or any other tool (for example, a measuring tool).

The exposed part 23 is a part exposed from the rotation body 41 in a state in which the tool holder 2A is attached to the rotation body 41 of the rotation device 4. In other words, in a state in which the held part 21 is held by the rotation body 41 of the rotation device 4, the exposed part 23 is exposed from the rotation body 41 of the rotation device 4. In the example illustrated in FIG. 1, the exposed part 23, which is exposed from the rotation body 41, is a combination of a plurality of members having various outer diameters or a plurality of parts having various outer diameters. In the example illustrated in FIG. 2, the power receiver 31 is provided in the outer circumferential edge region RG of the exposed part 23.

### (Air Sprayer 47)

In the example illustrated in FIG. 1, the machine tool 1A includes an air sprayer 47. The air sprayer 47 sprays air to the power receiver 31 of the tool holder 2A, which is holdable by the rotation body 41 of the rotation device 4. The air sprayer 47 sprays air to the power receiver 31 to powdery chips, chips, and/or dust adhered to the power receiver 31, blowing the powdery chips, chips, and/or dust off the power receiver 31. This prevents an instable supply of power from the power feeding part 51 to the power receiver 31, which can be otherwise caused by powdery chips, chips, and/or dust adhered to the power receiver 31.

When the power feeding part 51 is positioned at the retracted position P2, the air sprayer 47 may spray air to the power receiver 31 of the tool holder 2A. Alternatively, when the power feeding part 51 is positioned at the power feeding position P1, the air sprayer 47 may spray air to both the power receiver 31 of the tool holder 2A and the power feeding part 51.

In the example illustrated in FIG. 4, the air sprayer 47 is provided at the rotation device 4 (more specifically, the support body 43 of the rotation device 4). The air sprayer 47 sprays air from an end portion of the rotation device 4 at the first direction *DR1* side toward the power receiver 31 of the tool holder 2A.

The air sprayer 47 includes an air spray hole 47h, an air supply path 48, which supplies air to the air spray hole 47h, and a valve 48v, which opens and closes the air supply path 48. When the valve 48v is in open state, air is supplied from an air supply source to the air spray hole 47h through the air supply path 48. When, in contrast, the valve 48v is in closed state, the air supply path 48 is closed, and no air is supplied to the air spray hole 47h. In the example illustrated in FIG. 4, the air supply path 48 and the valve 48v are provided at the rotation device 4 (more specifically, the support body 43 of the rotation device 4).

The air sprayer 47 also cools the tool holder 2A held by the rotation body 41 of the rotation device 4. When the workpiece W is machined using the tool 39 held by the tool holder 2A, the tool holder 2A has a high temperature. Also, if a user contacts the high-temperature tool holder 2A, the user might suffer a burn injury. In view of a possible burn injury, the air sprayer 47 sprays air to the tool holder 2A after the machining of the workpiece W in order to cool the tool holder 2A. Thus, the machine tool exhibits enhanced user safety.

### (Method of Power Supply)

In the example illustrated in FIG. 3, the power feeding part 51 supplies power to the power receiver 31 by a non-contact method. More specifically, when the power feeding part 51 is positioned at the power feeding position P1, the power feeding part 51 is able to supply power to the power receiver 31 of the tool holder 2A by a non-contact method. When, in contrast, the power feeding part 51 is positioned at the retracted position P2 (see FIG. 1), the power feeding part 51 is unable to supply power the power receiver 31. In other words, the retracted position P2 is an unfeedable position.

In a case where the power feeding part 51 is able to supply power to the power receiver 31 by a non-contact method, the power feeding part 51 does not cause any mechanical obstruction to the tool holder 2A while the tool holder 2A is rotating about the first axis AX1. Also in this case, it is not necessary to perform advanced positioning control on the power feeding part 51 relative to the power receiver 31. Further in this case, there is no wiring electrically connecting the power feeding part 51 and the power receiver 31 to each other. This ensures that the tool holder 2A held by the rotation device 4 can be easily exchanged to another tool holder.

In the example illustrated in FIG. 3, the power feeding part 51 supplies power to the power receiver 31 by electromagnetic induction. In other words, the power feeding part 51 constitutes a first inductive coupler, and the power receiver 31 constitutes a second inductive coupler that receives power from the power feeding part 51.

In the example illustrated in FIG. 3, the power feeding part 51 supplies power to the power receiver 31 by a proximity non-contact method. When the power feeding part 51 is positioned at the power feeding position P1, the distance between the power feeding part 51 and the power receiver 31 is, for example, 1.5 mm or less.

Non-contact feeding to a rotation body is generally performed in a direction parallel to the rotation axis of the rotation body. Contrarily, in the example illustrated in FIG. 3, the power receiver 31 receives power in a direction perpendicular to the first axis AX1. More specifically, the direction of power supply from the power feeding part 51 to the power receiver 31 is a direction perpendicular to the first axis AX1 and toward the first axis AX1.

As exemplified in FIG. 2, a straight line connecting the power feeding part 51 positioned at the power feeding position P1 to a portion of the power receiver 31 which portion faces the power feeding part 51 is preferably perpendicular to the first axis AX1. In the example illustrated in FIG. 2, the first axis AX1 is perpendicular to the horizontal plane. Also, the power feeding part 51 and the power receiver 31 are provided on the same horizontal plane.

### (Rotation Device 4)

In the example illustrated in FIG. 4, the rotation device 4 includes the rotation body 41 and the support body 43. The rotation body 41 holds the tool holder 2A and rotates about the first axis AX1 together with the tool holder 2A. The rotation body 41 preferably rotates about the first axis AX1 together with the entire tool holder 2A.

The support body 43 supports the rotation body 41 rotatably about the first axis AX1. The rotation body 41 is occasionally referred to as a tool spindle, and the support body 43 is occasionally referred to as a tool headstock. The rotation body 41 and the support body 43 are each made up of a plurality of members.

In the example illustrated in FIG. 4, the rotation device 4 includes a bearing 44,which is provided between the rotation body 41 and the support body 43, and a rotary drive 45 (for example, a motor), which rotates the rotation body 41 about the first axis AX1. In the example illustrated in FIG. 4, the rotary drive 45 includes a stator 45s, which is fixed to the support body 43, and a rotor 45r, which is fixed to the rotation body 41. Upon supply of current to the stator 45s, the rotor 45r is caused to rotate about the first axis AX1 by an electromagnetic effect between the stator 45s and the rotor 45r. Alternatively, the rotary drive 45 may include a motor and a transfer mechanism (such as a gear or a transmission belt) that transmits the motive power of the motor to the rotation body 41.

### (First Mover 53)

The first mover 53 moves the power feeding part 51 from the retracted position P2 to the power feeding position P1 to make the power feeding part 51 near to the power receiver 31 of the tool holder 2A.

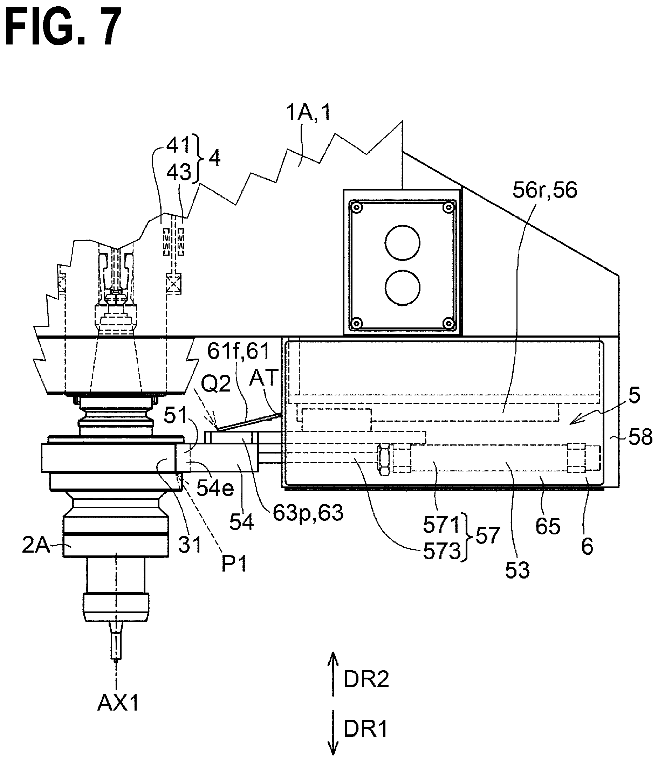

In the example illustrated in FIG. 7, the first mover 53 includes a moving body 54, a drive 57, and a second support body 58, which supports the drive 57. The power feeding part 51 is provided at the moving body 54. In this case, the power feeding part 51 moves together with the moving body 54. In the example illustrated in FIG. 7, the power feeding part 51 is provided at a leading end portion 54e of the moving body 54.

As exemplified in FIG. 3, a leading end face 540e of the moving body 54 may have an arc shape in a view from a direction along the first axis AX1. More specifically, the leading end face 540e of the moving body 54 may have an arc shape complementary to the shape of the ring-shaped region RG1, in which the power receiver 31 is provided. In a case where the leading end face 540e of the moving body 54 has an arc shape, the leading end face 540e of the moving body 54 is nearer to the power receiver 31. In the example illustrated in FIG. 3, in a state in which the power feeding part 51 is positioned at the power feeding position P1, a line connecting a first end E1 of the arc of the above-described arc shape to a second end E2 of the arc of the arc shape crosses the ring-shaped region RG1, in which the power receiver 31 is provided.

The drive 57 moves the moving body 54. The drive 57 may be a motor or an actuator driven by fluid pressure. In the example illustrated in FIG. 7, the drive 57 includes a cylinder 571 and a rod 573, which is capable of reciprocating relative to the cylinder 571. Also, the moving body 54 is mounted on a leading end portion of the rod 573.

In the example illustrated in FIG. 7, the first mover 53 is supported by the support body 43 of the rotation device 4. More specifically, the second support body 58, which supports the drive 57, is fixed to the support body 43 of the rotation device 4.

In a case where the first mover 53 is supported by the support body 43 of the rotation device 4, the first mover 53 moves together with the support body 43 of the rotation device 4. Therefore, due to the movement of the support body 43 of the rotation device 4 (more specifically, the entire rotation device 4), the positional relationship between the power feeding part 51 positioned at the power feeding position P1 and the power receiver 31 of the tool holder 2A remains unchanged. Thus, even in a case where the support body 43 of the rotation device 4 (more specifically, the entire rotation device 4) moves, the supply of power from the power feeding part 51 to the power receiver 31 is maintained.

It is to be noted that this embodiment does not exclude any configuration in which the first mover 53 is supported by a member different from the support body 43 of the rotation device 4. It is to be noted, however, that in a case where the first mover 53 is supported by a member different from the support body 43 of the rotation device 4, it is necessary to move the power feeding part 51 in coordination with the movement of the support body 43 in order to maintain the supply of power to the power receiver 31.

In the example illustrated in FIG. 7, the power feeder 5 includes a guide member 56 (for example, a guide rail 56r), which guides the movement of the moving body 54.

### (Movement Direction of Power Feeding Part 51)

In the example illustrated in FIG. 4, the first mover 53 moves the power feeding part 51 in the direction perpendicular to the first axis AX1. More specifically, a line connecting the power feeding position P1 of the power feeding part 51 to the retracted position P2 of the power feeding part 51 is perpendicular to the first axis AX1. In this case, the power feeding part 51 moves between the power feeding position P1 and the retracted position P2 by a shorter movement stroke. Also in this case, the power feeding part 51 can be moved by a simple mechanism.

Also in a case where the power feeding part 51 is moved in the direction perpendicular to the first axis AX1, this configuration can be easily adapted to a plurality of kinds of tool holders having different sizes. For example, it will be assumed that a first-type tool holder where the distance between the first axis AX1 and the power receiver 31 is a first value is prepared, and a second-type tool holder where the distance between the first axis AX1 and the power receiver 31 is a second value different from the first value is prepared. In this case, when the tool holder attached to the rotation device 4 is changed from the first-type tool holder to the second-type tool holder, it suffices to change the movement stroke of the power feeding part 51 based on the difference between the first value and the second value.

In the example illustrated in FIG. 4, the first axis AX1 is perpendicular to the horizontal plane. Also in the example illustrated in FIG. 4, the first mover 53 moves the power feeding part 51 in a direction parallel to the horizontal plane.

### (Storage 6)

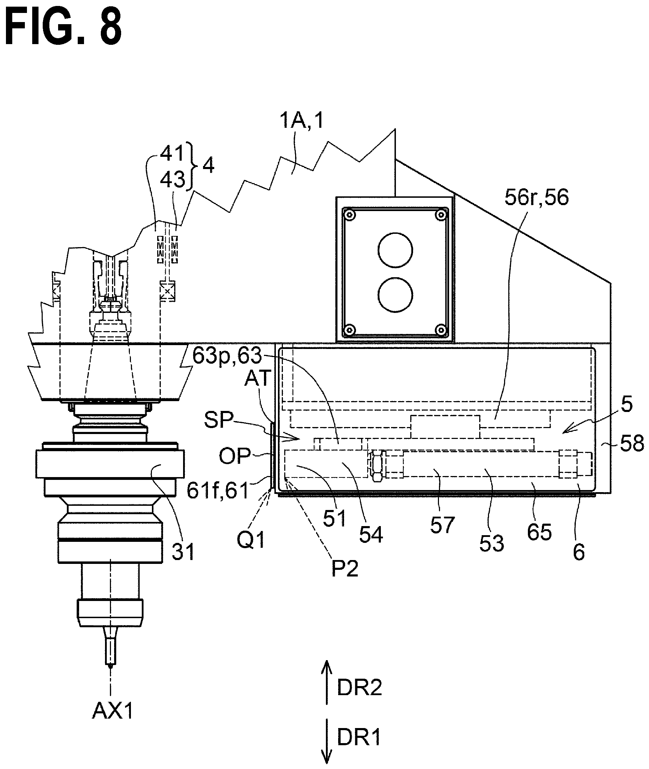

In the example illustrated in FIG. 8, the machine tool 1A includes a storage 6. The storage 6 stores the power feeding part 51 positioned at the retracted position P2. In the example illustrated in FIG. 9, the storage 6 has an opening OP, through which the power feeding part 51 is passable, and a closing body 61, which is capable of closing the opening OP. An example of the closing body 61 is a plate capable of closing the opening OP.

In the example illustrated in FIG. 8, the power feeding part 51 is stored in the storage 6, and the opening OP is closed by the closing body 61. This effectively prevents powdery chips, chips, and/or dust from adhering to the power feeding part 51.

In the examples illustrated in FIGs. 7 and 8, the closing body 61 is a flap 61f. The flap 61f is swingable about a swing axis AT between an open position Q2 (see FIG. 7) and a closed position Q1 (see FIG. 8). Alternatively, the closing body 61 may be a slide plate linearly movable between the open position Q2 and the closed position Q1.

In the example illustrated in FIG. 7, when the closing body 61 is positioned at the open position Q2 and when the power feeding part 51 is positioned at the power feeding position P1, the power feeding part 51 of the power feeder 5 is able to supply power to the power receiver 31.

In the example illustrated in FIG. 8, the power feeding part 51 is protected by the closing body 61. More specifically, when the closing body 61 is positioned at the closed position Q1 and when the power feeding part 51 is positioned at the retracted position P2, the power feeding part 51 of the power feeder 5 is protected by the closing body 61. In the example illustrated in FIG. 8, powdery chips, chips, and/or dust are prevented from adhering to the power feeding part 51 when the power feeding part 51 is not in use.

The machine tool 1A may include a closing body mover 63. The closing body mover 63 moves the closing body 61. The closing body mover 63 moves the closing body 61 between the open position Q2 (see FIG. 7) and the closed position Q1 (see FIG. 8). In the example illustrated in FIG. 7, the closing body mover 63 includes a pressing member 63p. The pressing member 63p is provided at the moving body 54. In the examples illustrated in FIGs. 7 and 8, the pressing member 63p moves to press the closing body 61 so as to move the closing body 61 from the closed position Q1 to the open position Q2. The pressing member 63p also moves in a direction to release the pressing of the closing body 61 so as to move the closing body 61 from the open position Q2 to the closed position Q1.

In the example illustrated in FIG. 8, the storage 6 includes a housing 65. The housing 65 defines a space SP, in which the power feeding part 51 is stored. The housing 65 is preferably capable of storing the entire moving body 54, at which the power feeding part 51 is provided. The housing 65 may also house the drive 57, which moves the moving body 54.

In the example illustrated in FIG. 8, a drive that moves the pressing member 63p is the same as the drive 57, which moves the moving body 54. More specifically, the drive 57 integrally moves the pressing member 63p and the moving body 54. Alternatively, the drive that moves the pressing member 63p may be different from the drive 57, which moves the moving body 54.

### (Tool Exchanger 7)

In the example illustrated in FIG. 10, the machine tool 1A includes a tool exchanger 7. The tool exchanger 7 exchanges the tool holder 2A held by the rotation device 4 (more specifically, the rotation body of the rotation device 4) to another tool holder. In the following description, the two tool holders exchanged by the tool exchanger 7 will be distinguished from each other. Specifically, one of the two tool holders will be referred to as "tool holder 2A", and the other of the two tool holders will be referred to as "second tool holder 2-2". Also, a tool held by the tool holder 2A and a tool held by the second tool holder 2-2 will be distinguished from each other. Specifically, the former tool will be referred to as "tool 39", and the latter tool will be referred to as "second tool 39-2".

In the example illustrated in FIG. 10, the rotation device 4 (more specifically, the rotation body of the rotation device 4) is able to selectively hold the tool holder 2A and the second tool holder 2-2. Upon the tool exchanger 7 exchanging the tool holder 2A held by the rotation device 4 to the second tool holder 2-2, the rotation device 4 holds the second tool holder 2-2.

In the example illustrated in FIG. 10, the tool holder 2A is a tool holder that includes the power receiver 31, which receives power from the power feeding part 51. The second tool holder 2-2 is a tool holder without a power receiver. An example of the second tool 39-2 held by the second tool holder 2-2 is the cutting tool 39b. Alternatively, as exemplified in FIG. 11, the second tool holder 2-2 may be a tool holder that includes the power receiver 31, which receives power from the power feeding part 51. The second tool 39-2 may be the friction stir welding tool 39a.

In the example illustrated in FIG. 12, when the tool exchanger 7 exchanges the tool holder 2A to the second tool holder 2-2, the retracted position P2 of the power feeding part 51 is set to a position outside a region AR. In the region AR, the tool exchanger 7, the tool holder 2A, and the second tool holder 2-2 pass. It is to be noted that in FIG. 12, the region AR, in which the tool exchanger 7, the tool holder 2A, and the second tool holder 2-2 pass, is hatched with dots to make the region AR easily recognizable.

By setting the retracted position P2 to a position outside the region AR, the power feeding part 51 does not cause any obstruction to the process of exchanging the tool holders performed by the tool exchanger 7.

In the example illustrated in FIG. 13, the power feeding position P1 of the power feeding part 51 is set to a position that causes obstruction to the region AR, in which the tool exchanger 7, the tool holder 2A, and the second tool holder 2-2 pass. In view of this obstruction, in the example illustrated in FIG. 13, the power feeding part 51 is moved from the power feeding position P1 to the retracted position P2 prior to the exchange of the tool holder 2A to the second tool holder 2-2 by the tool exchanger 7.

In the example illustrated in FIG. 10, the tool exchanger 7 includes a tool exchange arm 71, an arm rotation device 74, which rotates the tool exchange arm 71, and an arm mover 76, which linearly moves the tool exchange arm 71. The arm rotation device 74 rotates the tool exchange arm 71 about a second axis AX2. The arm mover 76 moves the tool exchange arm 71 in a direction parallel to the second axis AX2.

In the example illustrated in FIG. 12, the tool exchange arm 71 includes a first arm 72a and a second arm 72b. The first arm 72a includes a first gripper 73a, which is capable of gripping the tool holder 2A. The second arm 72b includes a second gripper 73b, which is capable of gripping the second tool holder 2-2. In the example illustrated in FIG. 12, the angle defined between the first arm 72a and the second arm 72b is 180 degrees. Alternatively, the angle defined between the first arm 72a and the second arm 72b may be an angle other than 180 degrees.

The tool exchange arm 71 (more specifically, the first arm 72a and the second arm 72b) is rotatable about the second axis AX2. In the example illustrated in FIG. 10, the second axis AX2 is parallel to the first axis AX1.

### (Stocker 8)

In the example illustrated in FIG. 10, the machine tool 1A includes a stocker 8. The stocker 8 is capable of storing the tool holder 2A and the second tool holder 2-2. The stocker 8 is capable of storing a plurality of tool holders 2 including the tool holder 2A and the second tool holder 2-2. The stocker 8 is preferably capable of storing both the tool holder 2A and a tool holder 2B. The tool holder 2A includes the power receiver 31, which is capable of receiving power from the power feeding part 51. The tool holder 2B is without a power receiver. The stocker 8 is preferably capable of storing both a tool holder 2A that holds the friction stir welding tool 39a and a tool holder 2B that holds the cutting tool 39b.

The stocker 8 includes a plurality of holding parts 81, which hold the plurality of respective tool holders 2; and a holding part mover 82, which moves the plurality of holding parts 81 along a circumferential orbit. The stocker 8 may include a holder takeout device 84. The holder takeout device 84 moves a tool holder 2 stored in the stocker 8 to a waiting position P3. The waiting position P3 is accessible by the tool exchanger 7.

As exemplified in FIG. 10, the stocker 8 may include an air sprayer 87 (which includes, for example, an air spray hole 87h and an air supplier that supplies air to the air spray hole 87h). The air sprayer 87 sprays air. The air sprayer 87 sprays air to the tool holders 2 stored in the stocker 8 or to a tool holder 2 taken out of the stocker 8. By spraying air to a tool holder 2, the tool holder 2 is cooled.

As exemplified in FIG. 14, the stocker 8 may include a protection cover 85. The protection cover 85 protects the power receiver 31 of the tool holder 2A. The protection cover 85 covers at least a part of the power receiver 31. In the example illustrated in FIG. 14, the protection cover 85 covers only a part of the power receiver 31 of the tool holder 2A stored in the stocker 8. Alternatively, as exemplified in FIG. 15, the protection cover 85 may cover the entire power receiver 31 of the tool holder 2A stored in the stocker 8. In the example illustrated in FIG. 15, the protection cover 85 includes a base 85a and an openable-closable member 85b. At the time of tool exchange, the openable-closable member 85b is moved to an open position. In this case, the openable-closable member 85b does not cause any obstruction to a tool exchange motion. Upon completion of the tool exchange, the openable-closable member 85b is moved to a closed position. Thus, the power receiver 31 is covered by the base 85a and the openable-closable member 85b. It is to be noted that the openable-closable member 85b may be configured to move in coordination with the movement of the tool exchange arm.

In a case where at least a part of the power receiver 31 is covered by the protection cover 85, powdery chips, chips, and/or dust are prevented from adhering to the power receiver 31 of the tool holder 2A stored in the stocker 8. In particular, the stocker 8 exemplified in FIG. 14 is a disc-shaped stocker provided as if the stocker extends in a vertical direction from the ground. In such stocker 8, droplets such as of coolant, powdery chips, chips, and/or dust might fall from a tool holder stored at an upper part of the stocker 8, and these droplets, powdery chips, chips, and/or dust might adhere to the power receiver of a tool holder 31 stored at a lower part of the stocker 8. The protection cover 85 prevents these droplets, powdery chips, chips, and/or dust from adhering to the power receiver 31.

The protection cover 85 may be mounted on the holding part 81 holding the tool holder 2, or may be mounted on a member other than the holding part 81.

### (Tool Holder 2A)

In the example illustrated in FIG. 16, the tool holder 2A includes the held part 21, which is held by the rotation device 4 (more specifically, the rotation body 41 of the rotation device 4), the tool holding part 22, which holds the tool 39, and a center portion 24, which is provided between the held part 21 and the tool holding part 22. In the example illustrated in FIG. 16, the held part 21 is a base end portion of the tool holder 2A, and the tool holding part 22 is a leading end portion of the tool holder 2A. The held part 21 has, for example, a tapered shape whose outer diameter decreases in the second direction *DR2* (for example, an approximately circular conical shape). In the example illustrated in FIG. 16, the center portion 24 is a combination of a plurality of members having various outer diameters or a plurality of parts having various outer diameters. Also, the power receiver 31 is provided in the outer circumferential edge region RG of the center portion 24.

As exemplified in FIG. 17, a first plane PL1 passes an end 22s of the tool holder 2A at the first direction *DR1* side and is perpendicular to the first axis AX1. A second plane PL2 passes an end of the power receiver 31 at the first direction *DR1* side and is perpendicular to the first axis AX1. The distance between the first plane PL1 and the second plane PL2 is defined as first distance *L1.* Also, a third plane PL3 passes an end of the power receiver 31 at the second direction *DR2* side and is perpendicular to the first axis AX1. A fourth plane PL4 passes an end of the held part 21 at the first direction *DR1* side and is perpendicular to the first axis AX1. The distance between the third plane PL3 and the fourth plane PL4 is defined as second distance *L2*. In the example illustrated in FIG. 17, the first distance *L1* is greater than the second distance *L2.* In a case where the first distance *L1* is relatively greater, powdery chips and/or chips generated from the workpiece W are less likely to adhere to the power receiver 31.

In the example illustrated in FIG. 17, the tool holder 2A includes a gripped part 25. The gripped part 25 is grippable by the tool exchange arm 71 of the tool exchanger 7. The gripped part 25 may have a groove 25v (more specifically, an annular groove). In the groove 25v, a part of the tool exchange arm 71 is insertable. In the example illustrated in FIG. 17, the power receiver 31 is provided further at the first direction *DR1* side than the gripped part 25. The power receiver 31 is preferably provided a position adjacent to the gripped part 25. In a case where the power receiver 31 is provided adjacent to the gripped part 25, the first distance *L1* increases. This ensures that powdery chips and/or chips generated from the workpiece W are less likely to adhere to the power receiver 31.

In the example illustrated in FIG. 16, the outer circumferential edge region RG, in which the power receiver 31 is provided, has an outer diameter of *D1.* The outer diameter *D1* is greater than a maximum outer diameter *D2* of the gripped part 25. In the example illustrated in FIG. 16, the power receiver 31 is provided in a region further away from the first axis AX1 than an outermost edge of the gripped part 25 is away from the first axis AX1.
This enables the power feeding part 51 to easily approach the power receiver 31. Alternatively, the power receiver 31 may be provided in a region nearer to the first axis AX1 than the outermost edge of the gripped part 25 is near to the first axis AX1. In this case, the power receiver 31 becomes smaller in size, resulting in a reduction in the weight of the tool holder 2A.

In the example illustrated in FIG. 17, the tool holder 2A includes a sensor 34. The sensor 34 is electrically connected to the power receiver 31 to consume the power received from the power receiver 31. In other words, the sensor 34 is operated by the power received from the power receiver 31. In the example illustrated in FIG. 17, the sensor 34 and the power receiver 31 are connected to each other via a conductive wire 32.

In the example illustrated in FIG. 17, in a direction along the first axis AX1, the sensor 34 is provided further at the first direction *DR1* side than the power receiver 31. More specifically, in the direction along the first axis AX1, the sensor 34 is provided between the tool holding part 22 and the power receiver 31 of the tool holder 2A. By providing the sensor 34 between the tool holding part 22 and the power receiver 31, the first distance *L1* increases. This ensures that powdery chips and/or chips generated from the workpiece W are less likely to adhere to the power receiver 31.

In the example illustrated in FIG. 17, the at least one sensor 34 includes a load sensor 34a. The load sensor 34a detects a load that the tool holder 2A receives from the tool 39 (for example, the friction stir welding tool 39a). It is to be noted that the load that the tool holder 2A receives from the tool 39 is one of a plurality of physical quantities indicating a state of the tool holder 2A.

In the example illustrated in FIG. 17, a slide member 37 is provided between the load sensor 34a and the tool 39. The slide member 37 is movable in a direction parallel to the first axis AX1. In this case, the load sensor 34a detects a load that the tool holder 2A receives from the tool 39 via the slide member 37.

Alternatively or additionally, the at least one sensor 34 may include a temperature sensor 34b. The temperature sensor 34b detects a temperature of the tool holder 2A. The temperature of the tool holder 2A is one of a plurality of physical quantities indicating a state of the tool holder 2A.

Alternatively or additionally, the at least one sensor 34 may include a vibration sensor 34c. The vibration sensor 34c detects a vibration of the tool holder 2A. The vibration sensor 34c may be an acceleration sensor. The vibration of the tool holder 2A is one of a plurality of physical quantities indicating a state of the tool holder 2A.

The at least one sensor 34 may include a sensor other than the load sensor 34a, the temperature sensor 34b, and the vibration sensor 34c.

In the example illustrated in FIG. 17, the tool holder 2A includes a transmitter 35. The transmitter 35 receives a sensor signal from the sensor 34 and transmits the sensor signal to a signal receiver 52. The signal receiver 52 is provided outside the tool holder 2A. The transmitter 35 preferably transmits the sensor signal received from the sensor 34 to the signal receiver 52 by a wireless method. In the example illustrated in FIG. 17, the transmitter 35 includes a transmission antenna 35a. The transmission antenna 35a transmits the sensor signal to the signal receiver 52 by a wireless method.

The transmitter 35 is electrically connected to the sensor 34. In the example illustrated in FIG. 17, the sensor 34 and the transmitter 35 are connected to each other via a second conductive wire 36. The transmitter 35 transmits the sensor signal received from the sensor 34 to a controller 9, described later, via the signal receiver 52.

In the example illustrated in FIG. 17, the transmitter 35 is provided in the outer circumferential edge region RG of the tool holder 2A (more specifically, the outer circumferential edge region RG of the exposed part 23). The transmitter 35 is preferably provided at the power receiver 31 or near the power receiver 31. In this case, a compact electric system can be implemented for the tool holder 2A, including the transmitter 35 and the power receiver 31. In the example illustrated in FIG. 17, the sensor 34 transmits the sensor signal to the transmitter 35. The transmitter 35 then transmits the sensor signal to the signal receiver 52. In the example illustrated in FIG. 17, when the power feeding part 51 is positioned at the power feeding position, the transmitter 35 is able to transmit the sensor signal to the signal receiver 52 by a non-contact method (more specifically, by a proximity non-contact method). It is to be noted that in this embodiment, the position at which the transmitter 35 is provided will not be limited to the power receiver 31 or near the power receiver 31. The transmitter 35 of the tool holder 2A may be provided at any other position at which the transmitter 35 is able to wirelessly communicate with the signal receiver 52.

In the example illustrated in FIG. 17, the power receiver 31 and the transmitter 35 are provided along the direction parallel to the first axis AX1. Alternatively, the power receiver 31 and the transmitter 35 may be provided along a circumferential direction of a circle centered around the first axis AX1.

In the example illustrated in FIG. 17, the transmitter 35 transmits a first sensor signal to the signal receiver 52. The first sensor signal indicates the load detected by the load sensor 34a. Alternatively or additionally, the transmitter 35 may transmit a second sensor signal to the signal receiver 52. The second sensor signal indicates the temperature detected by the temperature sensor 34b. Alternatively or additionally, the transmitter 35 may transmit a third sensor signal to the signal receiver 52. The third sensor signal indicates the vibration detected by the vibration sensor 34c. The first sensor signal, the second sensor signal, and the third sensor signal may be transmitted from the transmitter 35 to the signal receiver 52 simultaneously. Alternatively, the first sensor signal, the second sensor signal, and the third sensor signal may be transmitted from the transmitter 35 to the signal receiver 52 in order. Also, each of the first sensor signal, the second sensor signal, and the third sensor signal may be transmitted from the transmitter 35 to the signal receiver 52 at predetermined time intervals. In a case where the transmitter 35 transmits a plurality of kinds of sensor signals to the signal receiver 52, a transmission antenna 35a may be prepared on a sensor-signal basis. In other words, the transmitter 35 may include a plurality of transmission antennas 35a.

### (Signal Receiver 52)

In the example illustrated in FIG. 17, the power feeder 5 includes the signal receiver 52. More specifically, the signal receiver 52, which receives the sensor signal from the transmitter 35, is provided at the leading end portion 54e of the moving body 54 of the power feeder 5. In this case, the signal receiver 52 is able to stably receive the sensor signal from the transmitter 35, which is provided in the outer circumferential edge region RG of the tool holder 2A.

The signal receiver 52 is preferably provided at the power feeding part 51 or near the power feeding part 51. It is to be noted, however, that in this embodiment, the position at which the signal receiver 52 is provided will not be limited to near the power feeding part 51. The signal receiver 52 may be provided at any position at which the signal receiver 52 is able to wirelessly communicate with the transmitter 35. The signal receiver 52 may be provided at a member other than the moving body 54. Also, the controller 9 (for example, a communication circuit of the controller 9), described later, may function as the signal receiver 52 to receive the sensor signal directly from the transmitter 35.

In the example illustrated in FIG. 17, the power feeding part 51 and the signal receiver 52 are provided along the direction parallel to the first axis AX1. Alternatively, as exemplified in FIG. 3, the power feeding part 51 and the signal receiver 52 may be provided along the arc shape of the leading end face 540e of the arc-shaped moving body 54.

### (Workpiece Support Member 101)

In the example illustrated in FIG. 18, the machine tool 1A includes a workpiece support member 101. The workpiece support member 101 supports the workpiece W, which is a to-be-worked object (for example, a joined object). An example of the workpiece support member 101 is a support table to which the workpiece W is fixed. In the example illustrated in FIG. 18, the workpiece support member 101 supports both the first workpiece W1 and the second workpiece W2 in a state in which a side surface of the first workpiece W1 and a side surface of the second workpiece W2 contact each other.

### (Second Mover 102)

In the example illustrated in FIG. 18, the machine tool 1A includes a second mover 102. The second mover 102 moves the tool holder 2A held by the rotation body 41 of the rotation device 4 relative to the workpiece support member 101. The second mover 102 is preferably capable of moving the tool holder 2A at least in a direction parallel to the vertical direction. The second mover 102 may be a device capable of moving the tool holder 2A two-dimensionally or three-dimensionally. For example, the second mover 102 may be capable of moving the tool holder 2A only in a direction along one of X axis or Y axis and capable of moving the tool holder 2A in a direction along the Z axis. Alternatively, the second mover 102 may be capable of moving the tool holder 2A in a direction along the X axis, capable of moving the tool holder 2A in a direction along the Y axis, and capable of moving the tool holder 2A in the direction along the Z axis. In the example illustrated in FIG. 18, the Z axis is an axis perpendicular to the horizontal plane, and the X axis is an axis parallel to the horizontal plane. The Y axis is an axis perpendicular to both the Z axis and the X axis.

In the example illustrated in FIG. 18, the second mover 102 moves the tool holder 2A by moving the support body 43 of the rotation device 4. More specifically, when the second mover 102 moves the support body 43, the entire rotation device 4, the tool holder 2A held by the rotation device 4, and the tool 39 held by the tool holder 2A move relative to the workpiece support member 101 and the workpiece W supported by the workpiece support member 101.

### (Third Mover 103)

The machine tool 1A may include a third mover 103. The third mover 103 moves the workpiece support member 101. The third mover 103 is a device that moves the workpiece support member 101 in, for example, a direction along the horizontal plane (in other words, a direction along the X-Y plane).

### (Controller 9)

In the example illustrated in FIG. 18, the machine tool 1A includes the controller 9. The controller 9 may be implemented by a single computer or a plurality of computers.

As exemplified in FIG. 18, the controller 9 includes a processor 91, a memory 92, a communication circuit 93, and an input device 94 (for example, touch panel-equipped display 942). The processor 91, the memory 92, the communication circuit 93, and the input device 94 are connected to each other via a bus 95. Data necessary for the machining of the workpiece W (such as data regarding the shape of the workpiece W and data regarding the machining position at which to machine the workpiece W) may be input to the controller 9 via the input device 94, or may be input to the controller 9 from another computer via the communication circuit 93. It is to be noted that the input device 94 will not be limited to the touch panel-equipped display 942. For example, the controller 9 may include: the input device 94, such as a button, a switch, a lever, a pointing device, and a keyboard; and a display that displays data input to the input device 94 or other information.

Based on the data input to the controller 9, the processor 91 executes a machining program 922, which is stored in the memory 92, to generate a control signal. The communication circuit 93 transmits the control signal to a control target instrument(s) (for example, the first mover 53, the power feeder 5, the rotation device 4, the second mover 102 and/or the third mover 103, the air sprayer 47 and/or the air sprayer 87, the stocker 8, and the tool exchanger 7). Thus, upon execution of the machining program 922 by the processor 91, the controller 9 is able to control the control target instruments.

The machining program 922 may include a first program for performing a first machining mode, described later. The machining program 922 may also include a second program for performing a second machining mode, described later. The machining program 922 may also include a third program for performing a tool exchange mode, described later.

The controller 9 transmits a control signal to the first mover 53 (more specifically, the drive 57 of the first mover 53) to move the power feeding part 51 to the power feeding position P1. In the following description, this control signal will be hereinafter referred to as "first control signal S1". The controller 9 also transmits a control signal to the power feeder 5 to supply power to the power feeding part 51. This control signal will be hereinafter referred to as "second control signal S2". The controller 9 also transmits a control signal to the rotation device 4 (more specifically, the rotary drive 45 of the rotation device 4). This control signal will be hereinafter referred to as "third control signal S3". The controller 9 also transmits a control signal to the second mover 102. This control signal will be hereinafter referred to as "fourth control signal S4". The controller 9 also transmits a control signal to the air sprayer 47 (more specifically, the valve 48v of the air sprayer 47). This control signal will be hereinafter referred to as "fifth control signal S5". The controller 9 also transmits a control signal to the first mover 53 (more specifically, the drive 57 of the first mover 53) to move the power feeding part 51 to the retracted position P2. This control signal will be hereinafter referred to as "sixth control signal S6". The controller 9 also transmits a control signal to the stocker 8. This control signal will be hereinafter referred to as "seventh control signal S7". The controller 9 also transmits a control signal to the tool exchanger 7. This control signal will be hereinafter referred to as "eighth control signal S8".

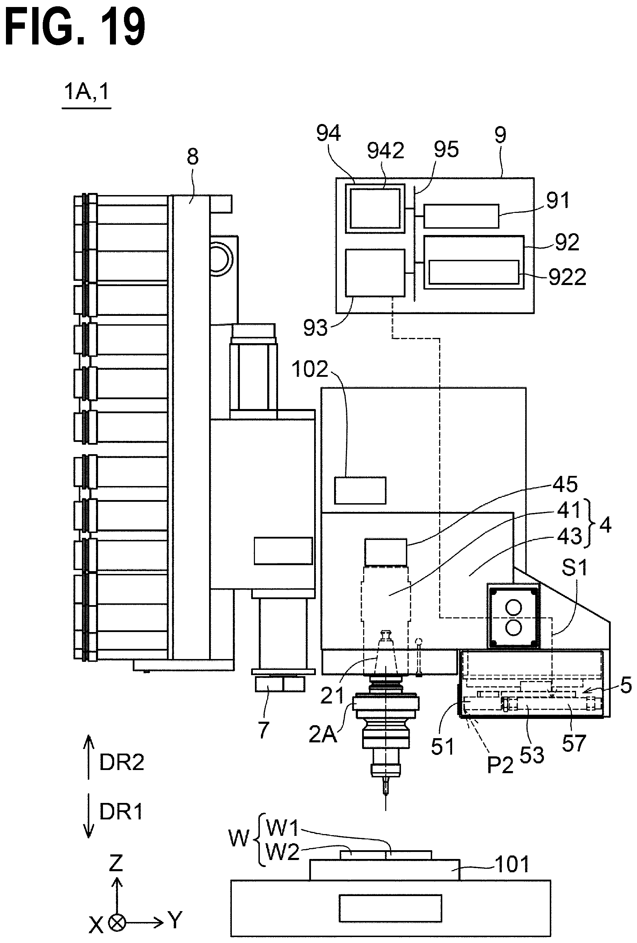

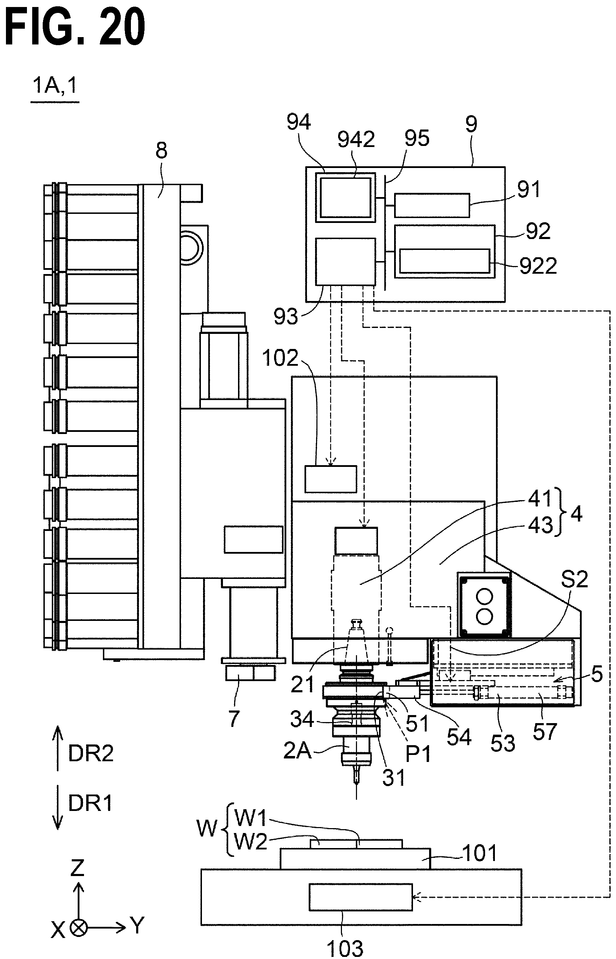

In the example illustrated in FIG. 19, the controller 9 controls the first mover 53. More specifically, the controller 9 transmits the first control signal S1 to the first mover 53. Upon receipt of the first control signal S1, the first mover 53 moves the power feeding part 51 from the retracted position P2 to the power feeding position P1 (see FIG. 20).

In the example illustrated in FIG. 20, the controller 9 controls the power feeder 5. More specifically, the controller 9 transmits the second control signal S2 to the power feeder 5. Upon receipt of the second control signal S2, the power feeder 5 supplies power to the power receiver 31 of the tool holder 2A via the power feeding part 51, which is provided at the moving body 54. Also, the power receiver 31 of the tool holder 2A supplies power to the sensor 34. Thus, the sensor 34 (for example, the load sensor 34a, the temperature sensor 34b, and the vibration sensor 34c) is operated by the power received from the power receiver 31.

In contrast, the transmitter 35 of the tool holder 2A (see, if necessary, FIG. 17) transmits the sensor signal indicating the physical quantity detected by the sensor 34 to the controller 9 via the signal receiver 52. For example, the transmitter 35 transmits the first sensor signal to the controller 9 via the signal receiver 52. The first sensor signal indicates the load detected by the load sensor 34a (more specifically, the load that the tool holder 2A receives from the tool 39). The transmitter 35 may transmit the second sensor signal to the controller 9 via the signal receiver 52. The second sensor signal indicates the temperature detected by the temperature sensor 34b (more specifically, the temperature of the tool holder 2A). The transmitter 35 may also transmit the third sensor signal to the controller 9 via the signal receiver 52. The third sensor signal indicates the vibration detected by the vibration sensor 34c (more specifically, the vibration of the tool holder 2A).

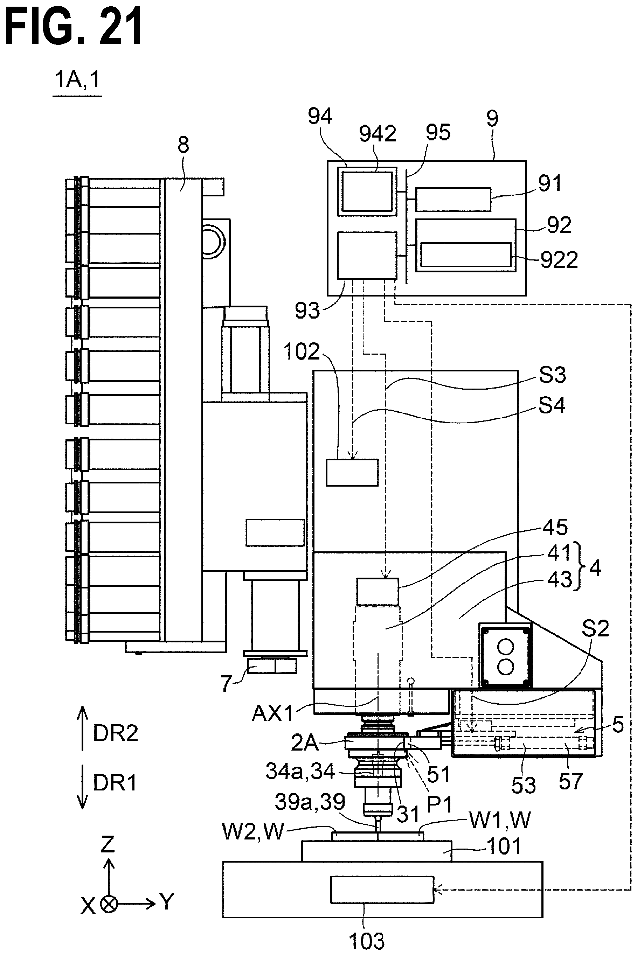

In the example illustrated in FIG. 21, the controller 9 controls the rotation device 4. More specifically, the controller 9 transmits the third control signal S3 to the rotation device 4. Upon receipt of the third control signal S3, the rotation device 4 rotates the rotation body 41 holding the tool holder 2A about the first axis AX1. Thus, the workpiece W is machined by the tool 39 held by the tool holder 2A. For example, the first workpiece W1 and the second workpiece W2 are joined together by friction stir welding by the tool 39 held by the tool holder 2A.

In the example illustrated in FIG. 21, the controller 9 controls the second mover 102. More specifically, the controller 9 transmits the fourth control signal S4 to the second mover 102. Upon receipt of the fourth control signal S4, the second mover 102 moves the rotation device 4, the tool holder 2A held by the rotation body 41 of the rotation device 4, and the tool 39 held by the tool holder 2A relative to the workpiece support member 101 (or the workpiece W supported by the workpiece support member 101).

The controller 9 transmits the third control signal S3 to the rotation device 4. At the same time, the controller 9 may transmit the fourth control signal S4 to the second mover 102. In this case, upon receipt of the third control signal S3, the rotation device 4 rotates the rotation body 41 holding the tool holder 2A about the first axis AX1. Upon receipt of the fourth control signal S4, the second mover 102 moves the tool holder 2A to change the machining position on the workpiece W. Thus, the workpiece W is machined, and the machining position on the workpiece W is changed at the same time.

Alternatively or additionally, the machining position on the workpiece W may be changed by controlling the third mover 103 by the controller 9.

The controller 9 may control the second mover 102 and/or the rotation device 4 based on the sensor signal received from the sensor 34 of the tool holder 2A.

While the workpiece W is being machined by the tool 39 held by the tool holder 2A, the controller 9 may, based on the first sensor signal received from the load sensor 34a of the tool holder 2A, control the second mover 102 to reduce a variation in the load that the tool holder 2A receives from the tool 39. For example, the controller 9 may control the second mover 102 so that the load detected by the load sensor 34a (in other words, the load that the tool holder 2A receives from the tool 39) becomes a target load. More specifically, if the load detected by the load sensor 34a exceeds the target load, the controller 9 controls the second mover 102 to move the tool holder 2A in a direction in which the tool holder 2A retracts from the workpiece W (in the example illustrated in FIG. 21, the upward direction). If the load detected by the load sensor 34a is lower than the target load, the controller 9 controls the second mover 102 to move the tool holder 2A in a direction toward the workpiece W (in the example illustrated in FIG. 21, the downward direction).

To reduce the variation in the load that the tool holder 2A receives from the tool 39 means to reduce a variation in the force that the tool 39 applies to the workpiece W. Therefore, by reducing the variation in the load that the tool holder 2A receives from the tool 39, the workpiece W is machined more stably. For example, in a case where the tool 39 held by the tool holder 2A is the friction stir welding tool 39a, the first workpiece W1 and the second workpiece W2 are joined together by friction stir welding more stably.

Alternatively or additionally, the controller 9 may, based on the second sensor signal received from the temperature sensor 34b of the tool holder 2A, control the second mover 102 to prevent an excessive increase in the temperature of the tool holder 2A. More specifically, if the temperature detected by the temperature sensor 34b (in other words, the temperature of the tool holder 2A) exceeds a first threshold, the controller 9 may control the second mover 102 to move the tool holder 2A in the direction in which the tool holder 2A retracts from the workpiece W (in the example illustrated in FIG. 21, the upward direction).

By preventing an excessive increase in the temperature of the tool holder 2A, the workpiece W is machined more stably. Also, by preventing an excessive increase in the temperature of the tool holder 2A, damage to the tool holder 2A (for example, damage to the sensor 34) and/or damage to the tool 39 are prevented.

Alternatively or additionally, the controller 9 may, based on the third sensor signal received from the vibration sensor 34c of the tool holder 2A, control the second mover 102 to prevent an excessive degree of vibration of the tool holder 2A. More specifically, if the vibration detected by the vibration sensor 34c (in other words, the vibration of the tool holder 2A) exceeds a predetermined threshold, the controller 9 may control the second mover 102 to move the tool holder 2A in the direction in which the tool holder 2A retracts from the workpiece W (in the example illustrated in FIG. 21, the upward direction).

By preventing an excessive degree of vibration of the tool holder 2A, the workpiece W is machined more stably. Also, by preventing an excessive degree of vibration of the tool holder 2A, damage to the tool holder 2A and/or damage to the tool 39 are prevented.

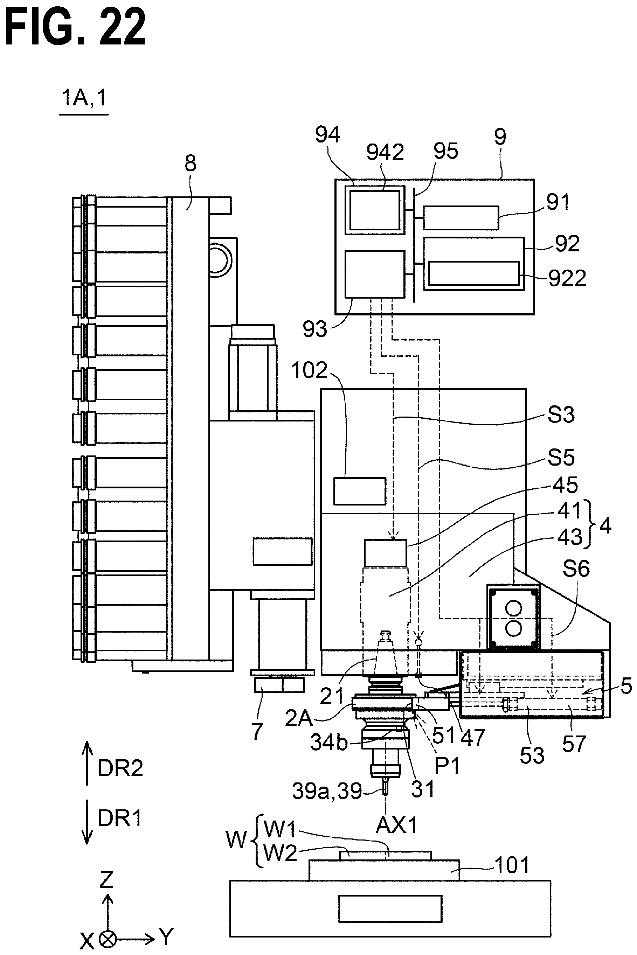

In the example illustrated in FIG. 22, the controller 9 controls the air sprayer 47. More specifically, the controller 9 transmits the fifth control signal S5 to the air sprayer 47. Upon receipt of the fifth control signal S5, the air sprayer 47 sprays air to the tool holder 2A (for example, the power receiver 31 of the tool holder 2A).

After completion of the machining of the workpiece W by the tool 39, the controller 9 may, based on the second sensor signal received from the temperature sensor 34b of the tool holder 2A, control the air sprayer 47 to keep the temperature of the tool holder 2A at a second threshold or less.

After completion of the machining of the workpiece W, by spraying air to the power receiver 31 of the tool holder 2A, powdery chips, chips, and/or dust are removed off the power receiver 31. Also after completion of the machining of the workpiece W, by spraying air to the tool holder 2A, the tool holder 2A is cooled. This ensures that even if the user of the machine tool contacts the tool holder 2A used to machine the workpiece W, the user will be safe from any possibility of burn injuries.

The controller 9 may control both the rotary drive 45 and the air sprayer 47 of the rotation device 4 to spray air to the tool holder 2A in a state in which the tool holder 2A is rotating about the first axis AX1. In this case, the removal of powdery chips, chips, and/or dust off the tool holder 2A and the cooling of the tool holder 2A are efficiently performed.

In the example illustrated in FIG. 22, the air sprayer 47 sprays air to the tool holder 2A in a state in which the power feeding part 51 is positioned at the power feeding position P1. In this case, air is sprayed to the power feeding part 51 as well. Alternatively, the air sprayer 47 may spray air to the tool holder 2A after the power feeding part 51 has been moved to the retracted position P2.

Alternatively or additionally, the air sprayer 47 may receive the fifth control signal S5 from the controller 9 before the start of machining of the workpiece W (for example, immediately after the tool holder 2A is attached to the rotation device 4). Then, based on the fifth control signal S5, the air sprayer 47 may spray air to the tool holder 2A. In this case, powdery chips, chips, and/or dust are removed off the power feeding part 51 prior to the machining of the workpiece W.

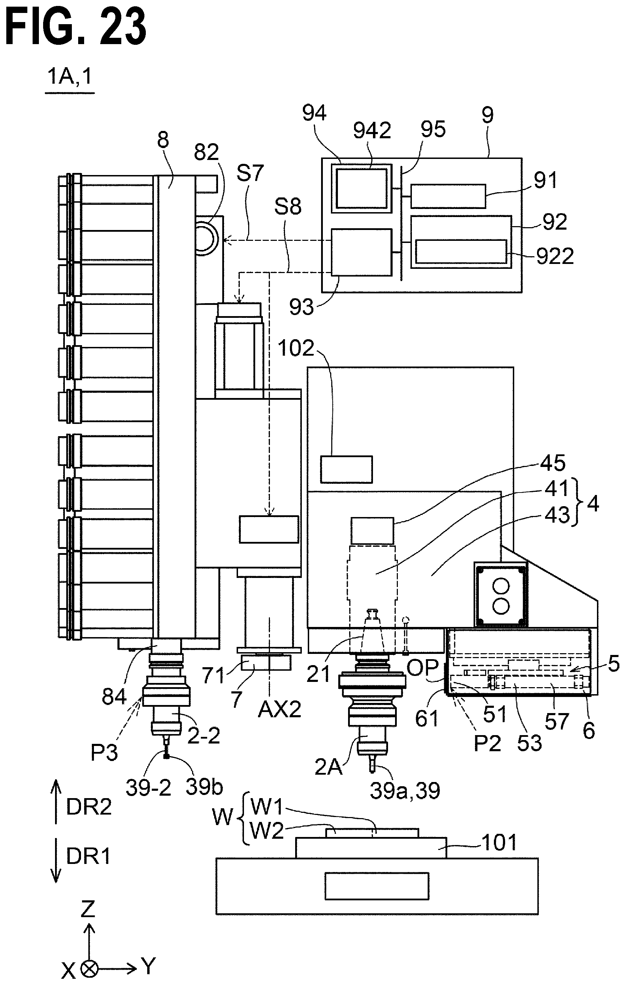

In the example illustrated in FIG. 22, the controller 9 controls the first mover 53 to move the power feeding part 51 to the retracted position P2. More specifically, the controller 9 transmits the sixth control signal S6 to the first mover 53. Upon receipt of the sixth control signal S6, the first mover 53 moves the power feeding part 51 from the power feeding position P1 to the retracted position P2 (see FIG. 23). It is to be noted that the power feeding part 51 positioned at the retracted position P2 is preferably stored in the storage 6. Also, in a state in which the power feeding part 51 is positioned at the retracted position P2, the opening OP of the storage 6 is preferably closed by the closing body 61.

In the example illustrated in FIG. 23, the controller 9 controls the stocker 8. More specifically, the controller 9 transmits the seventh control signal S7 to the stocker 8 (for example, the holding part mover 82 and/or the holder takeout device 84). Upon receipt of the seventh control signal S7, the stocker 8 moves the second tool holder 2-2 stored in the stocker 8 to the waiting position P3, which is accessible by the tool exchanger 7.

In the example illustrated in FIG. 23, the second tool holder 2-2 is a holder without a power receiver (more specifically, a purely mechanical holder). The second tool holder 2-2 is holding the cutting tool 39b.

Alternatively, the second tool holder 2-2 may be a holder including the power receiver 31 (in other words, a holder including a sensor operated by the power supplied from the power receiver 31). Also, the second tool holder 2-2 may hold the friction stir welding tool 39a.

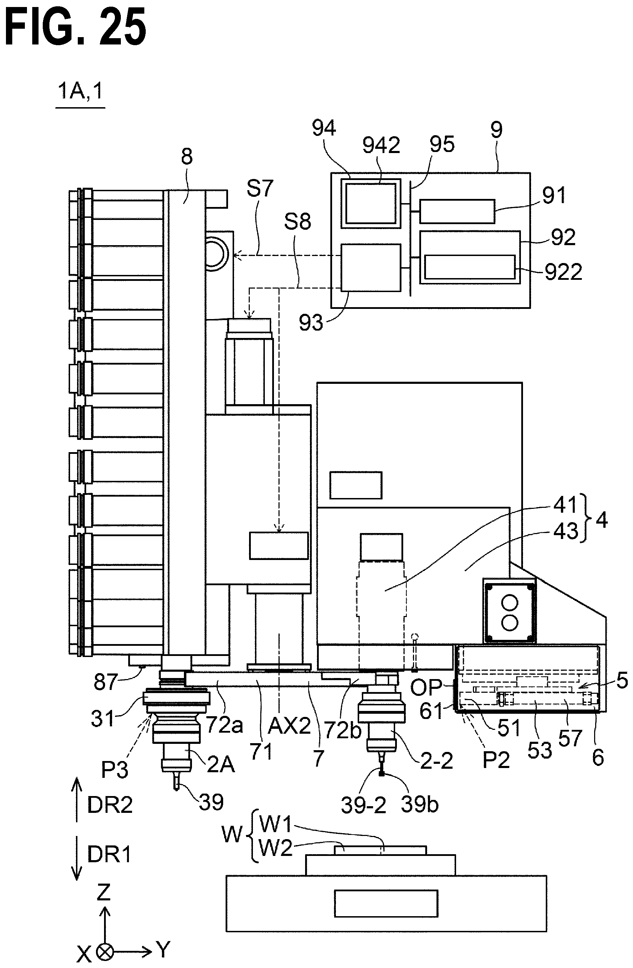

In the example illustrated in FIG. 23, the controller 9 controls the tool exchanger 7. More specifically, the controller 9 transmits the eighth control signal S8 to the tool exchanger 7. Upon receipt of the eighth control signal S8, the tool exchanger 7 exchanges the tool holder 2A held by the rotation body 41 of the rotation device 4 to the second tool holder 2-2. FIG. 25 illustrates how the tool holder 2A held by the rotation body 41 of the rotation device 4 is exchanged to the second tool holder 2-2 and how the rotation body 41 of the rotation device 4 holds the second tool holder 2-2.

In the example illustrated in FIG. 25, the controller 9 may control the air sprayer 87, which is provided at the stocker 8. More specifically, upon receipt of the control signal from the controller 9, the air sprayer 87 may spray air to the tool holder 2A stored in the stocker 8. In this case, the tool holder 2A having a raised temperature due to the machining of the workpiece is cooled, and the cooled tool holder 2A is stored in the stocker 8. Alternatively, upon receipt of the control signal from the controller 9, the air sprayer 87 may spray air to the tool holder 2A taken out of the stocker 8. In a case where air is sprayed to the tool holder 2A stored in the stocker 8 or to the tool holder 2A taken out of the stocker 8, even if the user of the machine tool contacts the tool holder 2A taken out of the stocker 8, the user will be safe from any possibility of burn injuries. In a case where the tool holder 2A is stored in the stocker 8 after air has been sprayed to the tool holder 2A, the inside of the stocker 8 will not be contaminated by droplets such as of coolant, powdery chips, chips, and/or dust. This prevents discharge of droplets such as of coolant, powdery chips, chips, and/or dust from a tool holder stored at an upper part of the stocker 8, and prevents these droplets, powdery chips, chips, and/or dust from adhering to the power receiver of a tool holder 31 stored at a lower part of the stocker 8.

### (First Machining Mode)

As exemplified in FIGs. 19 to 21, the controller 9 is capable of performing the first machining mode by controlling the first mover 53, the power feeder 5, the rotation device 4, and the second mover 102. As exemplified in FIG. 21, the first machining mode is a mode in which the workpiece W is machined by the tool 39 (for example, the friction stir welding tool 39a) held by the tool holder 2A in a state in which the power is being supplied from the power feeding part 51 positioned at the power feeding position P1 to the power receiver 31 of the tool holder 2A.

As exemplified in FIGs. 19 and 20, when the first machining mode is performed by the controller 9, upon receipt of the first control signal S1 from the controller 9, the first mover 53 moves the power feeding part 51 from the retracted position P2 (see FIG. 19) to the power feeding position P1 (see FIG. 20). Also when the first machining mode is performed by the controller 9, upon receipt of the second control signal S2 from the controller 9, the power feeder 5 supplies power to the sensor 34 via the power feeding part 51 and the power receiver 31 (see FIG. 20). Thus, the sensor 34 turns into operation state. The sensor 34 in operation state detects a physical quantity indicating a state of the tool holder 2A, and transmits the sensor signal indicating the physical quantity to the controller 9 (examples of the sensor signal including the first sensor signal, which indicates the load that the tool holder 2A receives from the tool 39, the second sensor signal, which indicates the temperature of the tool holder 2A, and the third sensor signal, which indicates the vibration of the tool holder 2A).

As exemplified in FIG. 21, when the first machining mode is performed by the controller 9, upon receipt of the third control signal S3 from the controller 9, the rotation device 4 rotates the tool holder 2A and the tool 39 held by the tool holder 2A (for example, the friction stir welding tool 39a) about the first axis AX1 and via the rotation body 41.

Also when the first machining mode is performed by the controller 9, upon receipt of the fourth control signal S4 from the controller 9, the second mover 102 moves the tool holder 2A and the tool 39 held by the tool holder 2A relative to the workpiece W to cause the tool 39 (for example, the friction stir welding tool 39a) to machine the workpiece W.

Thus, when the first machining mode is performed by the controller 9, the first mover 53, the power feeder 5, the rotation device 4 and the second mover 102 cooperate to cause the tool 39 held by the tool holder 2A to machine the workpiece W. Also, during the machining of the workpiece, the sensor 34 of the tool holder 2A is operated by the power supplied via the power receiver 31. This enables the sensor 34 of the tool holder 2A to detect a physical quantity indicating a state of the tool holder 2A during the machining of the workpiece.

When the first machining mode is performed by the controller 9, the controller 9 may control the second mover 102 and/or the rotary drive 45 based on the sensor signal received from the sensor 34 of the tool holder 2A.

For example, when the first machining mode is performed by the controller 9, the controller 9 controls the second mover 102 based on the first sensor signal received from the load sensor 34a of the tool holder 2A. The controller 9 may control the second mover 102 so that the load detected by the load sensor 34a of the tool holder 2A (in other words, the load that the tool holder 2A receives from the tool 39) becomes the target load. More specifically, if the load that the tool holder 2A receives from the tool 39 exceeds the target load, the controller 9 controls the second mover 102 to move the tool holder 2A in the direction in which the tool holder 2A retracts from the workpiece W (in the example illustrated in FIG. 21, the upward direction). If the load that the tool holder 2A receives from the tool 39 is lower than the target load, the controller 9 controls the second mover 102 to move the tool holder 2A in the direction toward the workpiece W (in the example illustrated in FIG. 21, the downward direction).

Alternatively or additionally, when the first machining mode is performed by the controller 9, the controller 9 may control the second mover 102 and/or the rotary drive 45 based on the second sensor signal received from the temperature sensor 34b of the tool holder 2A. For example, if the temperature of the tool holder 2A exceeds the first threshold, the controller 9 may control the second mover 102 to move the tool holder 2A in the direction in which the tool holder 2A retracts from the workpiece W (in the example illustrated in FIG. 21, the upward direction). Alternatively or additionally, if the temperature of the tool holder 2A exceeds the first threshold, the controller 9 may control the rotary drive 45 to decrease the rotational speed of the tool holder 2A.

Alternatively or additionally, when the first machining mode is performed by the controller 9, the controller 9 may control the second mover 102 and/or the rotary drive 45 based on the third sensor signal received from the vibration sensor 34c of the tool holder 2A. For example, if the vibration of the tool holder 2A exceeds the predetermined threshold, the controller 9 may control the second mover 102 to move the tool holder 2A in the direction in which the tool holder 2A retracts from the workpiece W (in the example illustrated in FIG. 21, the upward direction). Alternatively or additionally, if the vibration of the tool holder 2A exceeds the predetermined threshold, the controller 9 may control the rotary drive 45 to decrease the rotational speed of the tool holder 2A.

In a final phase of the first machining mode performed by the controller 9 (more specifically, after completion of the machining of the workpiece W using the tool 39), upon receipt of the sixth control signal S6 from the controller 9, the first mover 53 may move the power feeding part 51 from the power feeding position P1 (see FIG. 22) to the retracted position P2 (see FIG. 23). Also, the power feeding part 51 positioned at the retracted position P2 may be stored in the storage 6.

Additionally, when the first machining mode is performed by the controller 9, the controller 9 may control the air sprayer 47. More specifically, in the final phase of the first machining mode by the controller 9 (more specifically, after completion of the machining of the workpiece W using the tool 39), upon receipt of the fifth control signal S5 from the controller 9, the air sprayer 47 (see, if necessary, FIG. 22) may spray air to the tool holder 2A held by the rotation body 41 of the rotation device 4. Alternatively or additionally, during the machining of the workpiece W, the air sprayer 47 may spray air to the tool holder 2A held by the rotation body 41 of the rotation device 4 to prevent chips from adhering to the tool holder 2A.

### (Second Machining Mode)

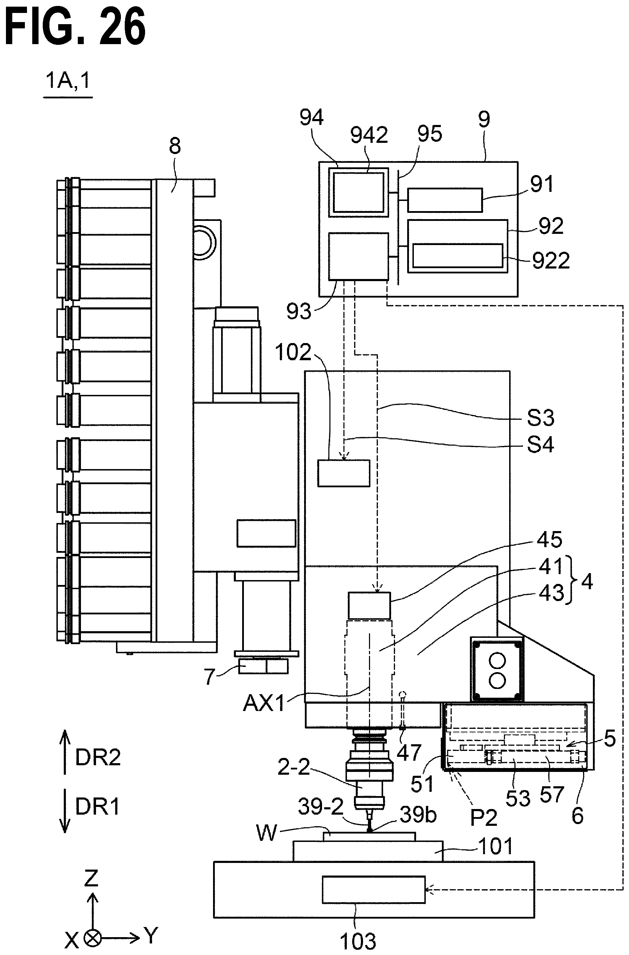

The controller 9 is capable of performing the second machining mode by controlling the rotation device 4 and the second mover 102. As exemplified in FIG. 26, the second machining mode is a mode in which the workpiece is machined by the second tool 39-2 (for example, the cutting tool 39b) held by the second tool holder 2-2 in a state in which the power feeding part 51 is positioned at the retracted position P2. It is to be noted that the workpiece machined by performing the second machining mode may be the same workpiece as the workpiece W machined by performing the first machining mode, or may be a workpiece different from the workpiece W machined by performing the first machining mode (this different workpiece will be hereinafter referred to as "the other workpiece").

When the second machining mode is performed by the controller 9, the power feeding part 51 is preferably stored in the storage 6. In this case, powdery chips and/or chips are prevented from adhering to the power feeding part 51 while the second machining mode is being performed.

When the second machining mode is performed by the controller 9, upon receipt of the third control signal S3 from the controller 9, the rotation device 4 rotates the second tool holder 2-2 and the second tool 39-2 (for example, the cutting tool 39b) held by the second tool holder 2-2 about the first axis AX1 via the rotation body 41.

Also when the second machining mode is performed by the controller 9, upon receipt of the fourth control signal S4 from the controller 9, the second mover 102 moves the second tool holder 2-2 and the second tool 39-2 held by the second tool holder 2-2 relative to the workpiece W to cause the second tool 39-2 (for example, the cutting tool 39b) to machine the workpiece W.

Thus, when the second machining mode is performed by the controller 9, the rotation device 4 and the second mover 102 cooperate to cause the second tool 39-2 held by the second tool holder 2-2 to machine the workpiece W.

### (Tool Exchange Mode)

The controller 9 is capable of performing the tool exchange mode by controlling the tool exchanger 7 and the stocker 8. As exemplified in FIG. 23, when the tool exchange mode is performed by the controller 9, the power feeding part 51 is preferably stored in the storage 6. In this case, while the tool exchange mode is being performed, the tool exchanger 7, the tool holder 2A, and the second tool holder 2-2 are prevented from colliding with the power feeding part 51.

When the tool exchange mode is performed by the controller 9, upon receipt of the seventh control signal S7 from the controller 9, the stocker 8 moves the second tool holder 2-2 stored in the stocker 8 to the waiting position P3, which is accessible by the tool exchanger 7 (see FIG. 23).

Also when the tool exchange mode is performed by the controller 9, upon receipt of the eighth control signal S8 from the controller 9, the tool exchanger 7 exchanges the tool holder 2A held by the rotation device 4 to the second tool holder 2-2 (see FIGs. 23 to 25).

### (Second Embodiment)

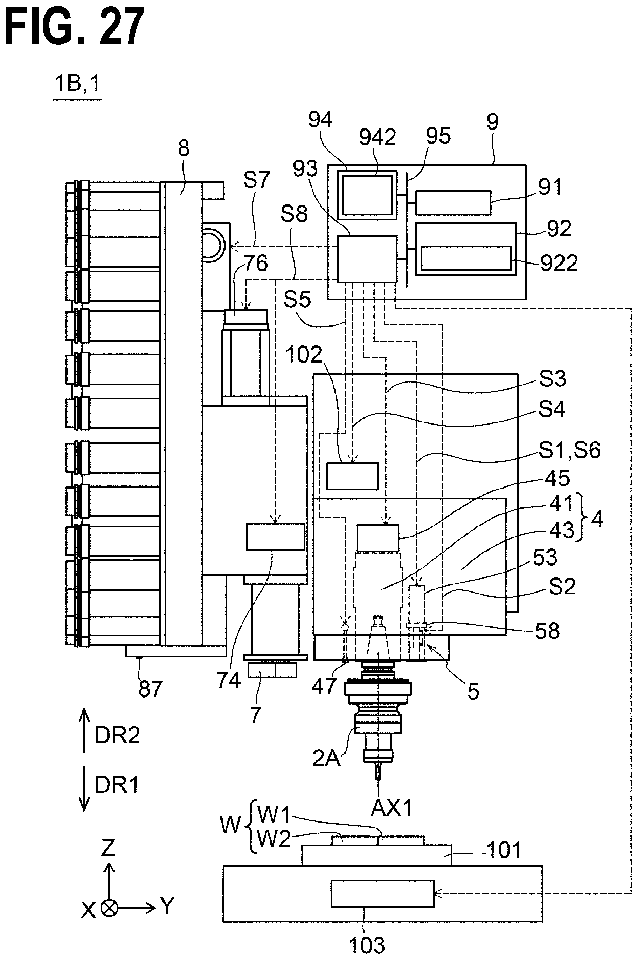

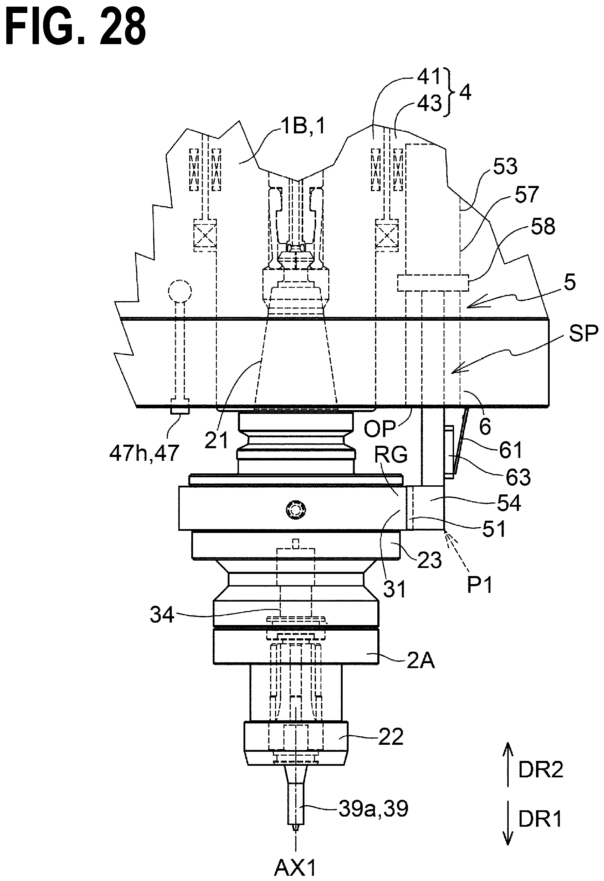

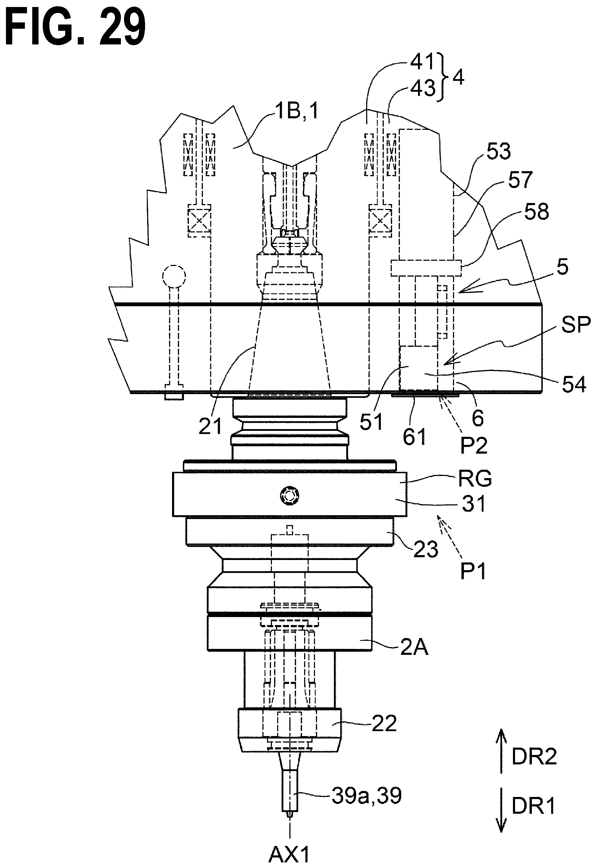

By referring to FIGs. 27 to 29, a machine tool 1B according to the second embodiment will be described. FIG. 27 is a schematic front view of the machine tool 1B according to the second embodiment. FIGs. 28 and 29 are each a schematic front view of a part of the machine tool 1B according to the second embodiment.

The following description of the second embodiment will mainly focus on those respects in which the second embodiment is different from the first embodiment. In contrast, those respects already described in the first embodiment will not be described in the second embodiment to avoid a repetition of description. Thus, it will be readily appreciated that those respects that are not explicitly described in the second embodiment but are described in the first embodiment also apply in the second embodiment.

As exemplified in FIG. 27, the machine tool 1B according to the second embodiment includes (1) the rotation device 4, which includes the rotation body 41, which rotates about the first axis AX1, (2) the tool holder 2A, which is attachable to the rotation body 41, and (3) the power feeder 5, which supplies power to the tool holder 2A. As exemplified in FIG. 28, the tool holder 2A includes (4) the power receiver 31, which is provided in the outer circumferential edge region RG of the tool holder 2A, and (5) the at least one sensor 34, which is electrically connected to the power receiver 31. The power feeder 5 includes (6) the power feeding part 51, which supplies power to the power receiver 31, and (7) the first mover 53, which moves the power feeding part 51 between the power feeding position P1, which faces the power receiver 31 (see FIG. 28), and the retracted position P2 (see FIG. 29), which is spaced further apart from the power receiver 31 than the power feeding position P1.

Thus, the second embodiment provides effects similar to the effects of the first embodiment.

The machine tool 1B according to the second embodiment different from the machine tool 1A according to the first embodiment in the movement direction of the power feeding part 51 and the arrangement of the storage 6. The machine tool 1B according to the second embodiment is otherwise similar to the machine tool 1A according to the first embodiment. In view of this, the following description of the second embodiment will focus on the movement direction of the power feeding part 51, configurations associated with the movement direction of the power feeding part 51, the arrangement of the storage 6, and configurations associated with the arrangement of the storage 6; description of other configurations will be omitted where otherwise a repetition of description occurs.

### (First Mover 53)

In the example illustrated in FIG. 28, the first mover 53 includes the moving body 54, the drive 57, and the second support body 58, which supports the drive 57.

At the moving body 54, the power feeding part 51 is provided. The drive 57 moves the moving body 54, at which the power feeding part 51 is provided. The drive 57 may be a motor or an actuator driven by fluid pressure. In the example illustrated in FIG. 28, the first mover 53 is supported by the support body 43 of the rotation device 4. More specifically, the second support body 58, which supports the drive 57, is fixed to the support body 43 of the rotation device 4.

### (Movement Direction of Power Feeding Part 51)

In the examples illustrated in FIGs. 28 and 29, the first mover 53 moves the power feeding part 51 in the direction parallel to the first axis AX1. More specifically, a line connecting the power feeding position P1 of the power feeding part 51 to the retracted position P2 of the power feeding part 51 is parallel to the first axis AX1. In this case, the power feeding part 51 moves between the power feeding position P1 and the retracted position P2 by a shorter movement stroke. Also in this case, the power feeding part 51 can be moved by a simple mechanism.

In the first embodiment, such an example has been described that the power feeding part 51 is moved in the direction perpendicular to the first axis AX1. In the second embodiment, such an example has been described that the power feeding part 51 moved in the direction parallel to the first axis AX1. Alternatively, the movement direction of the power feeding part 51 may be a direction inclined relative to the horizontal plane and vertical plane. In this case, however, the movement stroke of the power feeding part 51 increases.

### (Storage 6)

In the example illustrated in FIG. 29, the machine tool 1B includes the storage 6, which stores the power feeding part 51 positioned at the retracted position P2. The storage 6 has the opening OP (see FIG. 28), through which the power feeding part 51 is passable; and the closing body 61, which is capable of closing the opening OP. Further, the space SP, in which the power feeding part 51 is stored, is formed in the support body 43 of the rotation device 4.

### (Third Embodiment)

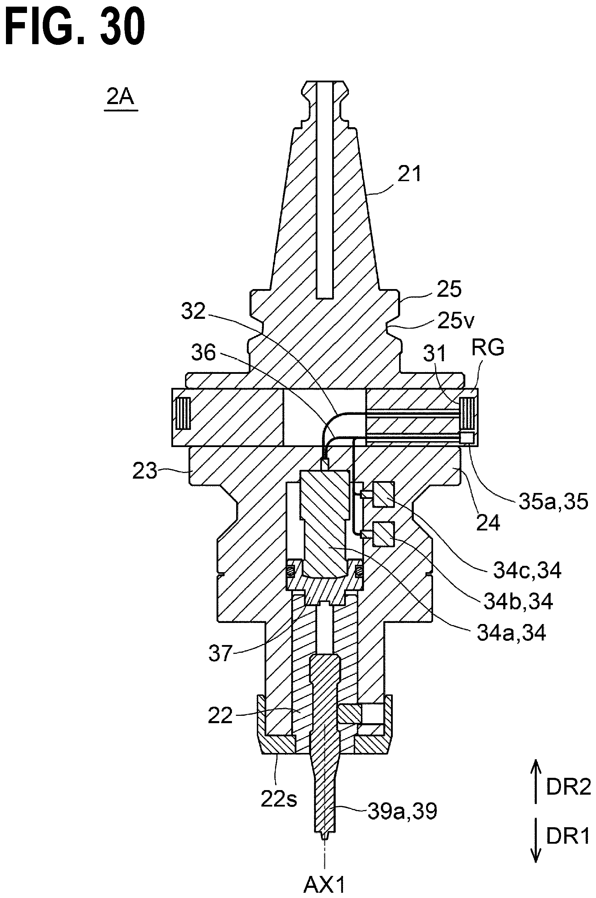

By referring to FIGs. 1 to 30, a tool holder 2A according to the third embodiment will be described. FIG. 30 is a schematic cross-sectional view of the tool holder 2A according to the third embodiment.

The following description of the third embodiment will mainly focus on those respects in which the third embodiment is different from the first embodiment. In contrast, those respects already described in the first embodiment will not be described in the third embodiment to avoid a repetition of description. Thus, it will be readily appreciated that those respects that are not explicitly described in the third embodiment but are described in the first embodiment also apply in the third embodiment.

As exemplified in FIG. 30, the tool holder 2A according to the third embodiment includes (1) the held part 21 held by the rotation device of the machine tool rotatably about the first axis AX1, (2) the tool holding part 22, which hold a tool, (3) the gripped part 25, which is provided between the held part 21 and the tool holding part 22 in the direction along the first axis AX1 and which is grippable by a tool exchange arm, (4) the power receiver 31, which is provided in the outer circumferential edge region RG, which is located between the held part 21 and the tool holding part 22 in the direction along the first axis AX1, and which receives power from the power feeding part of the machine tool by a non-contact method, and (5) the at least one sensor 34, which is electrically connected to the power receiver 31.

The tool holder 2A according to the third embodiment is attached to the rotation device 4 (more specifically, the rotation body 41 of the rotation device 4) described in the first or second embodiment. Thus, the third embodiment provides effects similar to the effects provided by the first or second embodiment.

The configuration of the tool holder 2A is as described in the first embodiment. In particular, the configuration of the tool holder 2A has been described in the first embodiment by referring to FIGs. 2, 3, 16, and 17. In view of this, the description of the tool holder 2A in the first embodiment will be incorporated in the description of the tool holder 2A in the third embodiment, and a description of the tool holder 2A will be omitted where otherwise a repetition of description occurs.

### (Method of Machining Workpiece)

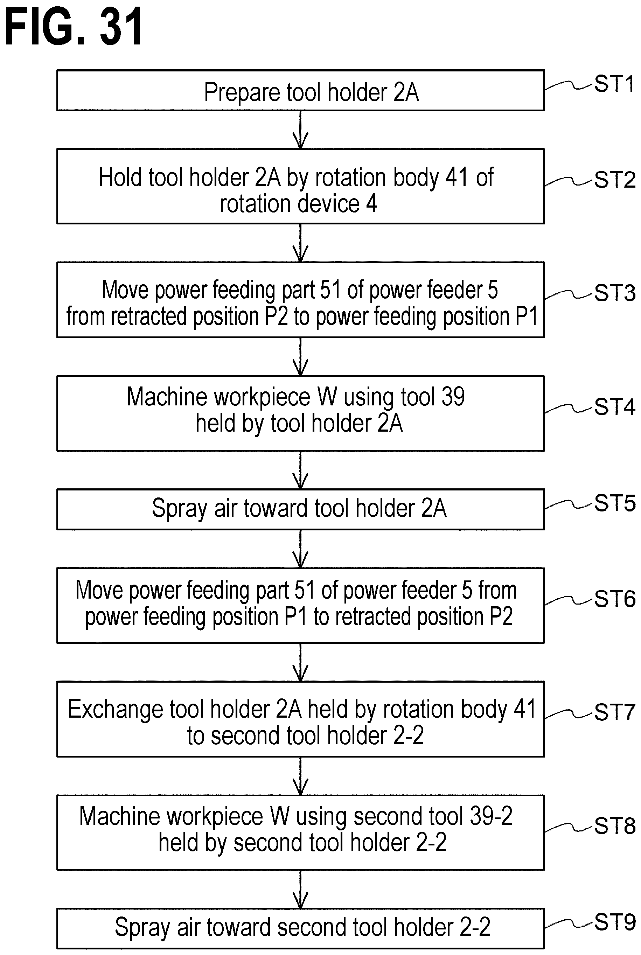

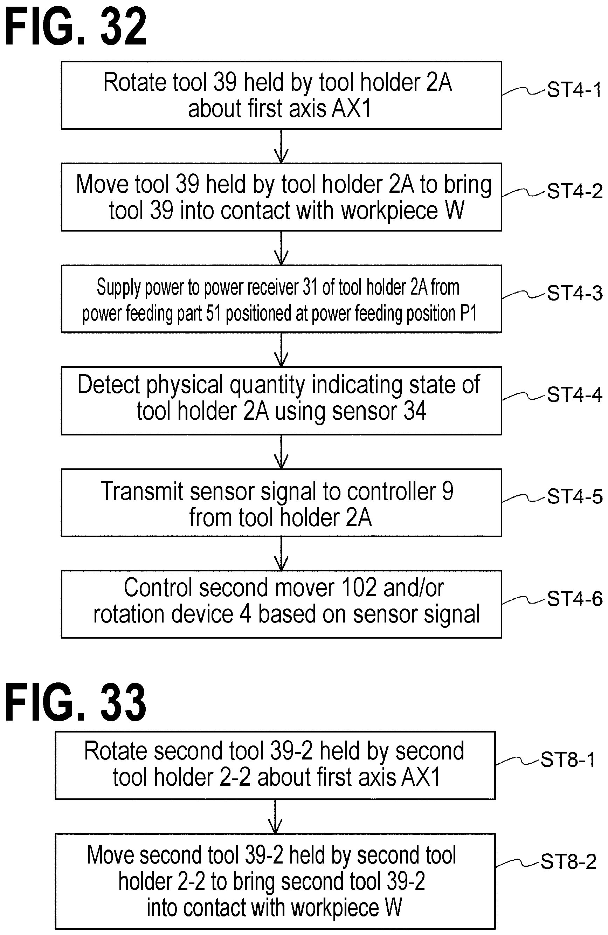

By referring to FIG. 1 to 33, description will be made with regard to method according to an embodiment of machining a workpiece. FIG. 31 is a flowchart of an example method according to this embodiment of machining a workpiece. FIG. 32 is a flowchart of a plurality of example sub-steps included in a first workpiece machining step. FIG. 33 is a flowchart of a plurality of example sub-steps included in a second workpiece machining step.

The machine tool 1 used in the method according to this embodiment of machining a workpiece may be the machine tool 1A according to the first embodiment, the machine tool 1B according to the second embodiment, or any other machine tool. The components of the machine tool 1 have been already described in the first or second embodiment, and a description of the components of the machine tool 1 will be omitted where otherwise a repetition of description occurs.

At first step ST1, the tool holder 2A is prepared. First step ST1 is a preparing step. As exemplified in FIG. 30, the tool holder 2A prepared in the preparing step includes (1) the tool holding part 22, which holds the tool 39 (for example, the friction stir welding tool 39a), (2) the held part 21, which is held by the rotation body of the rotation device of the machine tool, (3) the exposed part 23, (4) the power receiver 31, which is provided in the outer circumferential edge region RG of the exposed part 23, and (5) the at least one sensor 34, which is electrically connected to the power receiver 31.

The tool holder 2A has been already described in the first or third embodiment, and a description of the tool holder 2A will be omitted where otherwise a repetition of description occurs.

At second step ST2, the held part 21 of the tool holder 2A is held by the rotation body 41 of the rotation device 4. Second step ST2 is a holding step. As exemplified in FIGs. 1 and 29, in the holding step, the held part 21 of the tool holder 2A is held by the rotation body 41 of the rotation device 4 in a state in which the exposed part 23 of the tool holder 2A is exposed from the rotation body 41 of the rotation device 4.

The holding step may include attaching the tool holder 2A to the rotation body 41 of the rotation device 4 by the tool exchanger 7. Alternatively, the holding step may include attaching the tool holder 2A to the rotation body 41 of the rotation device 4 by a device other than the tool exchanger 7. Further alternatively, the holding step may include manually attaching the tool holder 2A to the rotation body 41 of the rotation device 4 by the user of the machine tool 1. FIG. 19 illustrates a state after the holding step is performed.

At third step ST3, the power feeding part 51 of the power feeder 5 of the machine tool 1 is moved from the retracted position P2 (see FIG. 19) to the power feeding position P1 (see FIG. 20), which faces the power receiver 31 of the tool holder 2A. Third step ST3 is a first moving step. The first moving step is performed in a state in which the held part 21 of the tool holder 2A is held by the rotation device 4 (more specifically, the rotation body 41 of the rotation device 4).

The power feeding position P1 is a position closer to the power receiver 31 than the retracted position P2 is close to the power receiver 31. In the example illustrated in FIG. 20, the power feeding position P1 is a position adjacent to the power receiver 31.

In the examples illustrated in FIGs. 19 and 20, the first moving step (third step ST3) includes moving the power feeding part 51 in the direction perpendicular to the first axis AX1 from the retracted position P2 toward the power feeding position P1. Alternatively, as exemplified in FIGs. 28 and 29, the first moving step may include moving the power feeding part 51 in the direction parallel to the first axis AX1 from the retracted position P2 toward the power feeding position P1. Further alternatively, the first moving step may include moving the power feeding part 51 in a direction inclined relative to the first axis AX1.

The first moving step (third step ST3) is performed by the first mover 53 by, upon receipt of the first control signal S1 from the controller 9, moving the moving body 54, at which the power feeding part 51 is provided.

As exemplified in FIG. 21, at fourth step ST4, the workpiece W is machined using the tool 39 (for example, the friction stir welding tool 39a) held by the tool holder 2A. Fourth step ST4 is a first machining step. The first machining step includes a plurality of sub-steps.

The plurality of sub-steps of the first machining step will be described.

At sub-step ST4-1, the rotation device 4 rotates the tool holder 2A and the tool 39 held by the tool holder 2A about the first axis AX1. Sub-step ST4-1 is a tool rotating step.

The tool rotating step (sub-step ST4-1) is performed by the rotation device 4 (more specifically, the rotary drive 45) by, upon receipt of the third control signal S3 from the controller 9, rotating the rotation body 41 of the rotation device 4, the tool holder 2A held by the rotation body 41, and the tool 39 held by the tool holder 2A about the first axis AX1.

At sub-step ST4-2, the second mover 102 moves the tool 39 held by the tool holder 2A. Sub-step ST4-2 is a tool moving step. The tool moving step includes, in a state in which the tool holder 2A is being rotated about the first axis AX1, moving the tool 39 two-dimensionally or three-dimensionally by the second mover 102 of the machine tool 1 to bring the tool 39 into contact with the workpiece W.

The tool moving step (sub-step ST4-2) is performed by the second mover 102 by, upon receipt of the fourth control signal S4 from the controller 9, moving the rotation device 4, the tool holder 2A held by the rotation body 41 of the rotation device 4, and the tool 39 held by the tool holder 2A. By performing the tool rotating step and the tool moving step, the workpiece W is machined.

At sub-step ST4-3, power is supplied to the power receiver 31 from the power feeding part 51 positioned at the power feeding position P1. Sub-step ST4-3 is a power supplying step. In the power supplying step, power is supplied, preferably by a non-contact method, to the power receiver 31 from the power feeding part 51 positioned at the power feeding position P1.

The power supplying step (sub-step ST4-3) may start before the start of the tool rotating step (sub-step ST4-1), may start after the start of the tool rotating step, or may start simultaneously with the start of the tool rotating step.

The power supplying step includes, in a state in which the tool holder 2A is being rotated about the first axis AX1, supplying power to the power receiver 31 of the tool holder 2A by the power feeding part 51 positioned at the power feeding position P1.

The power supplying step is performed by the power feeder 5 by, upon receipt of the second control signal S2 from the controller 9, suppling power to the power receiver 31 from the power feeding part 51.

At sub-step ST4-4, a physical quantity indicating a state of the tool holder 2A is detected using the sensor 34. Sub-step ST4-4 is a detecting step. The detecting step includes, in a state in which the tool holder 2A is being rotated about the first axis AX1, detecting a physical quantity indicating a state of the tool holder 2A by the sensor 34, which is operated by the power received from the power receiver 31.

In the example illustrated in FIG. 21, the detecting step includes, in a state in which the tool holder 2A is being rotated about the first axis AX1, detecting the load that the tool holder 2A receives from the tool 39 (for example, the friction stir welding tool 39a), the load being detected by the load sensor 34a, which is operated by the power received from the power receiver 31. Alternatively or additionally, the detecting step may include, in a state in which the tool holder 2A is being rotated about the first axis AX1, detecting the temperature of the tool holder 2A by the temperature sensor 34b, which is operated by the power received from the power receiver 31. Alternatively or additionally, the detecting step may include, in a state in which the tool holder 2A is being rotated about the first axis AX1, detecting the vibration of the tool holder 2A by the vibration sensor 34c, which is operated by the power received from the power receiver 31.

The first machining step (fourth step ST4) may include sub-step ST4-5. At sub-step ST4-5, the sensor 34 of the tool holder 2A transmits the sensor signal to the controller 9. Sub-step ST4-5 is a transmitting step.

The transmitting step is performed by the sensor 34 of the tool holder 2A by transmitting the sensor signal to the controller 9 via the transmitter 35 of the tool holder 2A and the signal receiver 52 (for example, the signal receiver 52, which is provided at the moving body 54 of the power feeder 5).

The transmitting step may include transmitting the first sensor signal to the controller 9 by the load sensor 34a of the tool holder 2A. The first sensor signal indicates the load that the tool holder 2A receives from the tool 39 (for example, the friction stir welding tool 39a). Alternatively or additionally, the transmitting step may include transmitting the second sensor signal, which indicates the temperature of the tool holder 2A, to the controller 9 by the temperature sensor 34b of the tool holder 2A. Alternatively or additionally, the transmitting step may include transmitting the third sensor signal, which indicates the vibration of the tool holder 2A, to the controller 9 by the vibration sensor 34c of the tool holder 2A.

The first machining step (fourth step ST4) may include sub-step ST4-6. At sub-step ST4-6, the controller 9 controls the second mover 102 and/or the rotation device 4 based on the sensor signal received from the sensor 34 of the tool holder 2A. Sub-step ST4-6 is a feedback controlling step.

The feedback controlling step includes controlling the second mover 102 by the controller 9 so that, for example, the load detected by the load sensor 34a becomes the target load. More specifically, if the load detected by the load sensor 34a exceeds the target load, the controller 9 controls the second mover 102 to move the tool 39 (for example, the friction stir welding tool 39a) in a direction in which the tool 39 retracts from the workpiece W (in the example illustrated in FIG. 21, the upward direction). If the load detected by the load sensor 34a is lower than the target load, the controller 9 controls the second mover 102 to move the tool 39 in a direction in which the tool 39 moves into the workpiece W (in the example illustrated in FIG. 21, the downward direction).

Alternatively or additionally, the feedback controlling step may include decreasing the load of the tool 39 based on the temperature detected by the temperature sensor 34b exceeding the first threshold. More specifically, based on the temperature detected by the temperature sensor 34b exceeding the first threshold, the controller 9 may control the second mover 102 to move the tool 39 in the direction in which the tool 39 retracts from the workpiece W (in the example illustrated in FIG. 21, the upward direction). Alternatively or additionally, based on the temperature detected by the temperature sensor 34b exceeding the first threshold, the controller 9 may control the rotation device 4 to decrease the rotational speed of the tool 39.

Alternatively or additionally, the feedback controlling step may include decreasing the load of the tool 39 based on the vibration detected by the vibration sensor 34c exceeding the predetermined threshold. More specifically, based on the vibration detected by the vibration sensor 34c exceeding the predetermined threshold, the controller 9 may control the second mover 102 to move the tool 39 in the direction in which the tool 39 retracts from the workpiece W (in the example illustrated in FIG. 21, the upward direction). Alternatively or additionally, based on the vibration detected by the vibration sensor 34c exceeding the predetermined threshold, the controller 9 may control the rotation device 4 to decrease the rotational speed of the tool 39.

By performing feedback control, the workpiece W is machined more stably. Also, damage to the tool holder 2A (for example, damage to the sensor 34) and/or damage to the tool 39 are prevented. It is to be noted that the above-described transmitting step (sub-step ST4-5) and feedback controlling step (sub-step ST4-6) may be omitted in a case where information obtained by the sensor 34 without feedback control is analyzed after completion of the machining of the workpiece W.

After the workpiece W has been machined by performing the first machining step, fifth step ST5 may be performed. At fifth At step ST5, air is sprayed toward the tool holder 2A (more specifically, the power receiver 31 of the tool holder 2A). Fifth step ST5 is an air spraying step. The air spraying step includes, by the air sprayer 47, spraying air to the tool holder 2A held by the rotation body 41 of the rotation device 4.

The air spraying step may be performed in a state in which the power feeding part 51 is positioned at the power feeding position P1, or may be performed after the power feeding part 51 has been moved to the retracted position P2. The air spraying step may also be performed in a state in which the tool holder 2A is rotating about the first axis AX1, or may be performed after the rotation of the tool holder 2A about the first axis AX1 has stopped.

By performing the air spraying step, powdery chips and/or chips are removed off the power receiver 31 of the tool holder 2A. Also by performing the air spraying step, the tool holder 2A is cooled.

The air spraying step (fifth step ST5) is performed by the air sprayer 47 by, upon receipt of the fifth control signal S5 from the controller 9, spraying air to the tool holder 2A held by the rotation body 41 of the rotation device 4.

At sixth step ST6, the power feeding part 51 is moved from the power feeding position P1 (see FIG. 22) to the retracted position P2 (see FIG. 23). Sixth step ST6 is a second moving step. The second moving step is performed in a state in which the held part 21 of the tool holder 2A is held by the rotation device 4 (more specifically, the rotation body 41 of the rotation device 4).

The second moving step (sixth step ST6) may include moving the power feeding part 51 in the direction perpendicular to the first axis AX1 from the power feeding position P1 toward the retracted position P2. Alternatively, the second moving step may include moving the power feeding part 51 in the direction parallel to the first axis AX1 from the power feeding position P1 toward the retracted position P2. Further alternatively, the second moving step may include moving the power feeding part 51 in a direction inclined relative to the first axis AX1.

The second moving step is performed by the first mover 53 by, upon receipt of the sixth control signal S6 from the controller 9, moving the moving body 54, at which the power feeding part 51 is provided.

As exemplified in FIG. 23, by performing the second moving step, the power feeding part 51 positioned at the retracted position P2 may be stored in the storage 6. In other words, the second moving step may include moving the power feeding part 51 from the power feeding position P1 to the retracted position P2 in the storage 6. Additionally, the opening OP of the storage 6 may be closed by the closing body 61 after the power feeding part 51 has been moved to the retracted position P2 in the storage 6.

Sixth step ST6 may be performed after fifth step ST5 or before fifth step ST5.

The method according to this embodiment of machining a workpiece may include seventh step ST7. At seventh step ST7, the tool holder 2A held by the rotation body 41 of the rotation device 4 is exchanged to the second tool holder 2-2. Seventh step ST7 is a tool exchanging step. The tool exchanging step is performed by the tool exchanger 7 by, upon receipt of the eighth control signal S8 from the controller 9, exchanging the tool holder 2A held by the rotation body 41 of the rotation device 4 to the second tool holder 2-2 (see FIGs. 23 to 25).

The tool exchanging step (seventh step ST7) may include moving the second tool holder 2-2 stored in the stocker 8 to the waiting position P3, which is accessible by the tool exchanger 7 (see FIG. 23). More specifically, upon receipt of the seventh control signal S7 from the controller 9, the stocker 8 moves the second tool holder 2-2 stored in the stocker 8 to the waiting position P3, which is accessible by the tool exchanger 7.

The tool exchanging step (seventh step ST7) may include causing the tool exchange arm 71 holding both the tool holder 2A and the second tool holder 2-2 to move in the direction parallel to the second axis AX2, and causing the tool exchange arm 71 to rotationally move about the second axis AX2.

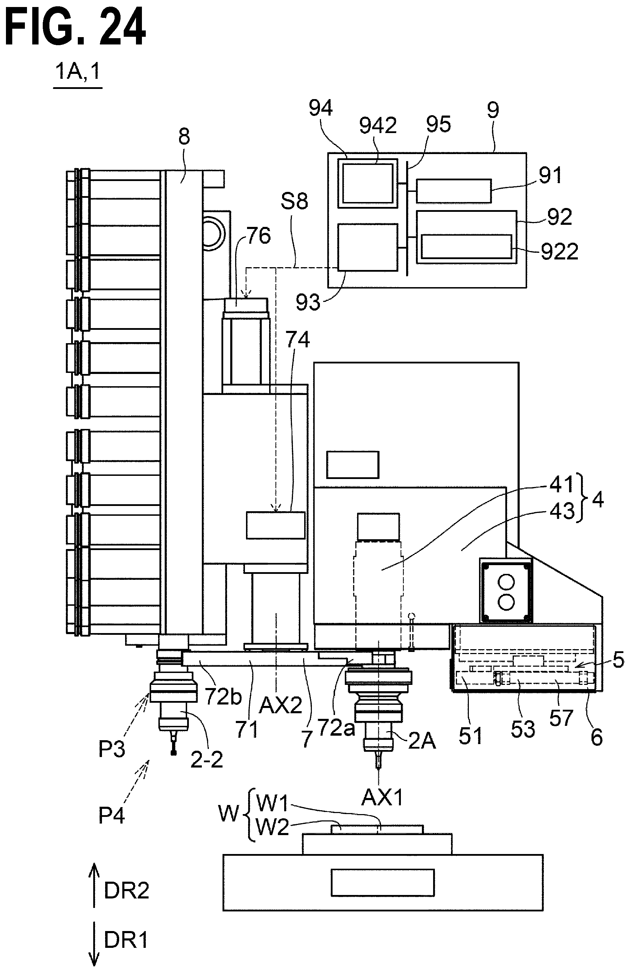

More specifically, first, the arm rotation device 74 rotates the tool exchange arm 71 about the second axis AX2. As a result, as exemplified in FIG. 24, the first arm 72a of the tool exchange arm 71 holds the tool holder 2A held by the rotation body 41 of the rotation device 4, and the second arm 72b of the tool exchange arm 71 holds the second tool holder 2-2 positioned at the waiting position P3.

Second, the arm mover 76 moves the tool exchange arm 71 in the first direction *DR1.* As a result, the tool holder 2A is removed from the rotation body 41 of the rotation device 4. Also, the second tool holder 2-2 moves to a position P4 (see FIG. 24). The position P4 is located further in the first direction *DR1* than the waiting position P3.

Third, the arm rotation device 74 rotates the tool exchange arm 71 about the second axis AX2. As a result, the second tool holder 2-2 gripped by the second arm 72b moves to a position facing the rotation device 4. Also, the tool holder 2A gripped by the first arm 72a moves to the position P4 (see FIG. 24).

Fourth, the arm mover 76 moves the tool exchange arm 71 in the second direction *DR2.* As a result, the second tool holder 2-2 is attached to the rotation body 41 of the rotation device 4, and the tool holder 2A moves to the waiting position P3 (see FIG. 25).

In the examples illustrated in FIGs. 23 to 25, the tool exchanging step (seventh step ST7) is performed in a state in which the power feeding part 51 is positioned at the retracted position P2. This ensures that during the tool exchanging step, the tool exchange arm 71 and/or other elements will not collide with the power feeding part 51.

In the example illustrated in FIG. 25, after the tool exchanging step, the tool holder 2A positioned at the waiting position P3 is preferably stored in the stocker 8.

After the tool exchanging step (seventh step ST7), the air sprayer 87 may spray air to the tool holder 2A stored in the stocker 8 (for example, the tool holder 2A positioned at the waiting position P3). In this case, the tool holder 2A is cooled before the tool holder 2A is stored in the stocker 8. Alternatively, when the tool holder 2A temporarily stored in the stocker 8 is taken out of the stocker 8, the air sprayer 87 may spray air to the tool holder 2A.

The method according to this embodiment of machining a workpiece may include eighth step ST8. At eighth step ST8, the workpiece is machined using the second tool 39-2 held by the second tool holder 2-2 (for example, the cutting tool 39b). In the example illustrated in FIG. 26, the second tool holder 2-2 is a tool holder attached to the rotation body 41 of the rotation device 4 by the tool exchanger 7. Also, the second tool holder 2-2 is, for example, a tool holder without a power receiver.

The workpiece machined in the second machining step may be the same as the workpiece W machined in the first machining step. Alternatively, the workpiece machined in the second machining step may be another workpiece different from the workpiece W machined in the first machining step.

The plurality of sub-steps of the second machining step will be described.

As exemplified in FIG. 26, at sub-step ST8-1, the rotation device 4 rotates the second tool holder 2-2 and the second tool 39-2 held by the second tool holder 2-2 (for example, the cutting tool 39b) about the first axis AX1. Sub-step ST8-1 is a second tool rotating step.

The second tool rotating step (sub-step ST8-1) is performed by the rotation device 4 (more specifically, the rotary drive 45) by, upon receipt of the third control signal S3 from the controller 9, rotating about the first axis AX1 the rotation body 41 of the rotation device 4, the second tool holder 2-2 held by the rotation body 41, and the second tool 39-2 held by the second tool holder 2-2.

At sub-step ST8-2, the second mover 102 moves the second tool 39-2 held by the second tool holder 2-2. Sub-step ST8-2 is a second tool moving step. The second tool moving step includes, in a state in which the second tool holder 2-2 is being rotated about the first axis AX1, moving the second tool 39-2 two-dimensionally or three-dimensionally by the second mover 102 of the machine tool 1 to bring the second tool 39-2 into contact with the workpiece W.

The second tool moving step (sub-step ST8-2) is performed by the second mover 102 by, upon receipt of the fourth control signal S4 from the controller 9, moving the rotation device 4, the second tool holder 2-2 held by the rotation body 41 of the rotation device 4, and the second tool 39-2 held by the second tool holder 2-2. By performing the second tool rotating step and the second tool moving step, the workpiece W or another workpiece is machined.

In a case where the second tool holder 2-2 is a tool holder without a power receiver, the second machining step (eighth step ST8) is preferably performed in a state in which the power feeding part 51 is positioned at the retracted position P2 (more specifically, the retracted position P2 in the storage 6). In this case, during the second machining step, powdery chips and/or chips are prevented from adhering to the power feeding part 51.

As exemplified in FIG. 26, in a case where the second tool 39-2 is the cutting tool 39b, during the second machining step, coolant may be supplied to a region in which the second tool 39-2 is positioned. In the example illustrated in FIG. 26, since the power feeding part 51 is positioned at the retracted position P2 in the storage 6, coolant is prevented from adhering to the power feeding part 51.

After the workpiece has been machined by performing the second machining step, ninth step ST9 may be performed. At ninth step ST9, air is sprayed toward the second tool holder 2-2. Ninth step ST9 is a second air spraying step. The second air spraying step includes, by the air sprayer 47, spraying air to the second tool holder 2-2 held by the rotation body 41 of the rotation device 4. By performing the second air spraying step, powdery chips and/or chips are removed off the second tool holder 2-2. Also by performing the second air spraying step, the second tool holder 2-2 is cooled.

In the above-described example, the second machining step (eighth step ST8) is performed after the first machining step (fourth step ST4). Alternatively, the second machining step (eighth step ST8) may be performed before the first machining step (fourth step ST4). In this case, the step of exchanging the tool holder 2A held by the rotation body 41 of the rotation device 4 to the second tool holder 2-2 is replaced by the step of exchanging the second tool holder 2-2 held by the rotation body 41 of the rotation device 4 to the tool holder 2A.

In the above-described example, in a case where the tool holder held by the rotation body 41 of the rotation device 4 includes the power receiver 31, the first machining step is performed. In a case where the tool holder held by the rotation body 41 of the rotation device 4 does not include a power receiver, the second machining step is performed. Also, the position of the power feeding part 51 is selected based on whether the tool holder includes a power receiver. More specifically, in a case where the tool holder held by the rotation body 41 of the rotation device 4 includes the power receiver 31, the workpiece is machined in a state in which the power feeding part 51 is positioned at the power feeding position P1. In contrast, in a case where the tool holder held by the rotation body 41 of the rotation device 4 does not include a power receiver, the workpiece is machined in a state in which the power feeding part 51 is positioned at the retracted position P2.

The present invention will not be limited to the above-described embodiments and/or modifications; it will be appreciated that the embodiments may be modified or changed within the scope of the present invention as defined by the following claims.

### Reference Signs List

1, 1A, 1B ... Machine tool, 2, 2A, 2B ... Tool holder, 2-2 ... Second tool holder, 4 ... Rotation device, 5 ... Power feeder, 6 ... Storage, 7 ... Tool exchanger, 8 ... Stocker, 9 ... Controller, 21 ... Held part, 22 ... Tool holding part, 22s ... End of tool holder, 23 ... Exposed part, 24 ... Center portion, 25 ... Gripped part, 25v ... Groove, 29 ... Flange, 31 ... Power receiver, 31c ... Power receiving coil, 32 ... Conductive wire, 34 ... Sensor, 34a ... Load sensor, 34b ... Temperature sensor, 34c ... Vibration sensor, 35 ... Transmitter, 35a ... Transmission antenna, 36 ... Second conductive wire, 37 ... Slide member, 39 ... Tool, 39-2 ... Second tool, 39a ... Friction stir welding tool, 39b ... Machining tool, 41 ... Rotation body, 43 ... Support body, 44 ... Bearing, 45 ... Rotary drive, 45r ... Rotation device, 45s ... Stator, 47 ... Air sprayer, 47h ... Air spray hole, 48 ... Air supply path, 48v ... Valve, 51 ... Power feeding part, 52 ... Signal receiver, 53 ... First mover, 54 ... Moving body, 54e ... Leading end portion of moving body, 56 ... Guide member, 56r ... Guide rail, 57 ... Driver, 58 ... Second support body, 61 ... Closing body, 61f ... Flap, 63 ... Closing body mover, 63p ... Pressing member, 65 ... Housing, 71 ... Tool exchange arm, 72a ... First arm, 72b ... Second arm, 73a ... First gripper, 73b ... Second gripper, 74 ... Arm rotation device, 76 ... Arm mover, 81 ... Holding part, 82 ... Holding part mover, 84 ... Holder takeout device, 85 ... Protection cover, 85a ... Base, 85b ... Openable-closable member, 87 ... Air sprayer, 87h ... Air spray hole, 91 ... Processor, 92 ... Memory, 93 ... Communication circuit, 94 ... Input device, 95 ... Bus, 101 ... Workpiece support member, 102 ... Second mover, 103 ... Third mover, 390a ... Shoulder, 391a ... Shoulder surface, 392a ... Probe, 540e ... Leading end face of moving body, 571 ... Cylinder, 573 ... Rod, 922 ... Machining program, 942 ... Touch panel-equipped display, OP ... Opening, RG ... Outer circumferential edge region, RG1 ... Ring-shaped region, W ... Workpiece, W1 ... First workpiece, W2 ... Second workpiece

## Claims

1. A machine tool (1, 1A, 1B) comprising:
a rotation device (4) comprising a rotation body (41) rotatable about a first axis (AX1);
a tool holder (2, 2A, 2B) attachable to the rotation body (41); and
a power feeder (5) configured to supply power to the tool holder (2, 2A, 2B),
the tool holder (2, 2A, 2B) comprising:
a power receiver (31) provided in an outer circumferential edge region (RG) of the tool holder (2, 2A, 2B); and
at least one sensor (34) electrically connected to the power receiver (31),
the power feeder (5) comprising:
a power feeding part (51) configured to supply the power to the power receiver (31); and
a first mover (53) configured to move the power feeding part (51) between a power feeding position (P1) facing the power receiver (31) and a retracted position (P2) spaced further apart from the power receiver (31) than the power feeding position,
**characterized in that**
the at least one sensor (34) is configured to detect a physical quantity indicating a state of the tool holder (2, 2A, 2B), and
a tool (39) held by the tool holder (2, 2A, 2B) is a friction stir welding tool (39a),
the machine tool (1, 1A, 1B) further comprises:
a workpiece support member (101) configured to support a workpiece (W);
a second mover (102) configured to move, relative to the workpiece support member (101), the tool holder (2, 2A, 2B) held by the rotation body (41) of the rotation device (4); and
a controller (9) configured to control the first mover (53), the power feeder (5), the rotation device (4), and the second mover (102), wherein
either the at least one sensor (34) comprises a load sensor (34a) configured to detect a load that the tool holder (2, 2A, 2B) receives from the friction stir welding tool (39a), and the controller (9) is configured to control the second mover (102) so that the load detected by the load sensor (34a) becomes a target load,
or the rotation body (41) is configured to selectively hold the tool holder (2, 2A, 2B) and a second tool holder (2-2), wherein in a state in which the power is being supplied to the power receiver (31) of the tool holder (2, 2A, 2B) from the power feeding part (51) positioned at the power feeding position (P1), the controller (9) is configured to perform a first machining mode of machining the workpiece (W) using the friction stir welding tool (39a) held by the tool holder (2, 2A, 2B), and in a state in which the power feeding part (51) is positioned at the retracted position (P2), the controller (9) is configured to perform a second machining mode of machining the workpiece (W) or another workpiece using a cutting tool (39b) held by the second tool holder (2-2).

2. The machine tool (1, 1A, 1B) according to claim 1, wherein when the power feeding part (51) is positioned at the power feeding position (P1), the power feeding part (51) is configured to supply the power to the power receiver (31) of the tool holder (2, 2A, 2B) by a non-contact method.

3. The machine tool (1, 1A, 1B) according to claim 1 or 2,
wherein the tool holder (2, 2A, 2B) comprises a transmitter (35) provided at the power receiver (31) or near the power receiver (31) in the outer circumferential edge region (RG),
wherein the power feeder (5) comprises a signal receiver (52) provided at the power feeding part (51) or near the power feeding part (51),
wherein the at least one sensor (34) is configured to transmit a sensor signal to the transmitter (35), and
wherein the transmitter (35) is configured to transmit the sensor signal to the signal receiver (52).

4. The machine tool (1, 1A, 1B) according to claim 3, wherein when the power feeding part (51) is positioned at the power feeding position (P1), the transmitter (35) is configured to transmit the sensor signal to the signal receiver (52) by a non-contact method.

5. The machine tool (1, 1A, 1B) according to any one of claims 1 to 4, wherein the first mover (53) is configured to move the power feeding part (51) in a direction perpendicular to the first axis (AX1) or in a direction parallel to the first axis (AX1).

6. The machine tool (1, 1A, 1B) according to any one of claims 1 to 5,
wherein the rotation device (4) comprises a support body (43) configured to support the rotation body (41) rotatably about the first axis (AX1), and
wherein the first mover (53) is supported by the support body (43) of the rotation device (4).

7. The machine tool (1, 1A, 1B) according to any one of claims 1 to 6, further comprising a storage (6) in which the power feeding part (51) positioned at the retracted position (P2) is stored, the storage (6) having:
an opening (OP) through which the power feeding part (51) is passable; and
a closing body (61) configured to close the opening (OP).

8. The machine tool (1, 1A, 1B) according to any one of claims 1 to 7, further comprising a tool exchanger (7) configured to exchange the tool holder (2, 2A, 2B) held by the rotation body (41) of the rotation device (4) to a second tool holder (2-2),
wherein when the tool exchanger (7) exchanges the tool holder (2, 2A, 2B) to the second tool holder (2-2), the retracted position (P2) is set to an outside of a region in which the tool exchanger (7), the tool holder (2, 2A, 2B), and the second tool holder (2-2) pass.

9. The machine tool (1, 1A, 1B) according to claim 8, further comprising a stocker (8) in which the tool holder (2, 2A, 2B) and the second tool holder (2-2) are storable, the stocker (8) comprising a protection cover (85) covering at least a part of the power receiver (31) of the tool holder (2, 2A, 2B).

10. A method of machining a workpiece (W), the method comprising:
a step of preparing a tool holder (2, 2A, 2B), the tool holder (2, 2A, 2B) comprising:
a tool holding part (22) configured to hold a tool (39), the tool (39) being a friction stir welding tool (39a);
a held part (21) held by a rotation body (41) of a rotation device (4) of a machine tool (1, 1A, 1B);
an exposed part (23);
a power receiver (31) provided in an outer circumferential edge region (RG) of the exposed part (23); and
at least one sensor (34) electrically connected to the power receiver (31);
a step of holding the held part (21) by the rotation body (41) in a state in which the exposed part (23) is exposed from the rotation body (41);
a step of moving a power feeding part (51) of a power feeder (5) of the machine tool (1, 1A, 1B) from a retracted position (P2) to a power feeding position (P1) in a state in which the held part (21) is held by the rotation body (41), the power feeding position (P1) facing the power receiver (31); and
a step of machining a workpiece (W) using the tool (39) held by the tool holder (2, 2A, 2B), the step of machining the workpiece (W) using the tool (39) held by the tool holder (2, 2A, 2B) comprising:
causing the rotation device (4) to rotate the tool holder (2, 2A, 2B) and the tool (39) held by the tool holder (2, 2A, 2B) about a first axis (AX1);
in a state in which the tool holder (2, 2A, 2B) is being rotated about the first axis (AX1), causing a second mover (102) of the machine tool (1, 1A, 1B) to move the tool (39) to bring the tool (39) into contact with the workpiece (W);
in the state in which the tool holder (2, 2A, 2B) is being rotated about the first axis (AX1), causing the power feeding part (51) positioned at the power feeding position (P1) to supply power to the power receiver (31); and
in the state in which the tool holder (2, 2A, 2B) is being rotated about the first axis (AX1), causing the at least one sensor (34) operated by the power received from the power receiver (31) to detect a physical quantity indicating a state of the tool holder (2, 2A, 2B), wherein
either when the at least one sensor (34) comprises a load sensor (34a) configured to detect a load that the tool holder (2, 2A, 2B) receives from the friction stir welding tool (39a), controlling the second mover (102) so that the load detected by the load sensor (34a) becomes a target load,
or when the rotation body (41) is configured to selectively hold the tool holder (2, 2A, 2B) and a second tool holder (2-2), in a state in which the power is being supplied to the power receiver (31) of the tool holder (2, 2A, 2B) from the power feeding part (51) positioned at the power feeding position (P1), performing a first machining mode of machining the workpiece (W) using the friction stir welding tool (39a) held by the tool holder (2, 2A, 2B), and in a state in which the power feeding part (51) is positioned at the retracted position (P2), and performing a second machining mode of machining the workpiece (W) or another workpiece using a cutting tool (39b) held by the second tool holder (2-2).

11. The method of machining the workpiece, according to claim 10, further comprising:
a step of exchanging the tool holder (2, 2A, 2B) held by the rotation body (41) to the second tool holder (2-2) or a step of exchanging the second tool holder (2-2) held by the rotation body (41) to the tool holder (2, 2A, 2B); and
a step of machining the workpiece (W) or another workpiece using a second tool (39-2) held by the second tool holder (2-2), the step of machining the workpiece (W) or the other workpiece using the second tool (39-2) held by the second tool holder (2-2) being performed in a state in which the power feeding part (51) is positioned at the retracted position (P2).

## Patentansprüche

1. Werkzeugmaschine (1, 1A, 1B), die Folgendes aufweist:
eine Drehvorrichtung (4) mit einem Drehkörper (41), der um eine erste Achse (AX1) drehbar ist;
einen an den Drehkörper (41) anbringbaren Werkzeughalter (2, 2A, 2B); und
eine Energieversorgungseinrichtung (5), die gestaltet ist, um Energie zu dem Werkzeughalter (2, 2A, 2B) zuzuführen,
wobei der Werkzeughalter (2, 2A, 2B) Folgendes aufweist:
eine Energieaufnahmeeinrichtung (31), die in einem Außenumfangsrandbereich (RG) des Werkzeughalters (2, 2A, 2B) vorgesehen ist; und
zumindest einen Sensor (34), der elektrisch mit der Energieaufnahmeeinrichtung (31) verbunden ist,
wobei die Energieversorgungseinrichtung (5) Folgendes aufweist:
einen Energieversorgungsteil (51), der gestaltet ist, um die Energie zu der Energieaufnahmeeinrichtung (31) zuzuführen; und
ein erstes Bewegungselement (53), das gestaltet ist, um den Energieversorgungsteil (51) zwischen einer zu der Energieaufnahmeeinrichtung (31) zugewandten Energieversorgungsposition (P1) und einer zurückgezogenen Position (P2) zu bewegen, die weiter von der Energieaufnahmeeinrichtung (31) beabstandet ist als die Energieversorgungsposition,
**dadurch gekennzeichnet, dass**
der zumindest eine Sensor (34) gestaltet ist, um eine physikalische Größe zu erfassen, die einen Zustand des Werkzeughalters (2, 2A, 2B) anzeigt, und
ein durch den Werkzeughalter (2, 2A, 2B) gehaltenes Werkzeug (39) ein Reibrührschweißwerkzeug (39a) ist,
die Werkzeugmaschine (1, 1A, 1B) des Weiteren Folgendes aufweist:
ein Werkstückstützbauteil (101), das gestaltet ist, um ein Werkstück (W) zu stützen;
ein zweites Bewegungselement (102), das gestaltet ist, um den durch den Drehkörper (41) der Drehvorrichtung (4) gehaltenen Werkzeughalter (2, 2A, 2B) relativ zu dem Werkstückstützbauteil (101) zu bewegen; und
ein Steuerungsgerät (9), das gestaltet ist, um das erste Bewegungselement (53), die Energieversorgungseinrichtung (5), die Drehvorrichtung (4) und das zweite Bewegungselement (102) zu steuern, wobei
entweder der zumindest eine Sensor (34) einen Lastsensor (34a) aufweist, der gestaltet ist, um eine Last zu erfassen, die der Werkzeughalter (2, 2A, 2B) von dem Reibrührschweißwerkzeug (39a) aufnimmt, und das Steuerungsgerät (9) gestaltet ist, um das zweite Bewegungselement (102) so zu steuern, dass die durch den Lastsensor (34a) erfasste Last eine Solllast wird,
oder der Drehkörper (41) gestaltet ist, um wahlweise den Werkzeughalter (2, 2A, 2B) und einen zweiten Werkzeughalter (2-2) zu halten, wobei in einem Zustand, in dem die Energie zu der Energieaufnahmeeinrichtung (31) des Werkzeughalters (2, 2A, 2B) von dem an der Energieversorgungsposition (P1) positionierten Energieversorgungsteil (51) zugeführt wird, das Steuerungsgerät (9) gestaltet ist, um einen ersten Bearbeitungsmodus zur Bearbeitung des Werkstücks (W) unter Verwendung des durch den Werkzeughalter (2, 2A, 2B) gehaltenen Reibrührschweißwerkzeugs (39a) auszuführen, und in einem Zustand, in dem der Energieversorgungsteil (51) an der zurückgezogenen Position (P2) positioniert ist, das Steuerungsgerät (9) gestaltet ist, um einen zweiten Bearbeitungsmodus zur Bearbeitung des Werkstücks (W) oder eines anderen Werkstücks unter Verwendung eines durch den zweiten Werkzeughalter (2-2) gehaltenen Schneidwerkzeugs (39b) auszuführen.

2. Werkzeugmaschine (1, 1A, 1B) nach Anspruch 1, wobei, wenn der Energieversorgungsteil (51) an der Energieversorgungsposition (P1) positioniert ist, der Energieversorgungsteil (51) gestaltet ist, um die Energie zu der Energieaufnahmeeinrichtung (31) des Werkzeughalters (2, 2A, 2B) durch ein berührungsloses Verfahren zuzuführen.

3. Werkzeugmaschine (1, 1A, 1B) nach Anspruch 1 oder 2,
wobei der Werkzeughalter (2, 2A, 2B) einen Transmitter (35) aufweist, der an der Energieaufnahmeeinrichtung (31) oder in der Nähe der Energieaufnahmeeinrichtung (31) in dem Außenumfangsrandbereich (RG) vorgesehen ist,
wobei die Energieversorgungseinrichtung (5) einen Signalempfänger (52) aufweist, der an dem Energieversorgungsteil (51) oder in der Nähe des Energieversorgungsteils (51) vorgesehen ist,
wobei der zumindest eine Sensor (34) gestaltet ist, um ein Sensorsignal zu dem Transmitter (35) zu übertragen, und
wobei der Transmitter (35) gestaltet ist, um das Sensorsignal zu dem Signalempfänger (52) zu übertragen.

4. Werkzeugmaschine (1, 1A, 1B) nach Anspruch 3, wobei der Transmitter (35), wenn der Energieversorgungsteil (51) an der Energieversorgungsposition (P1) positioniert ist, gestaltet ist, um das Sensorsignal zu dem Signalempfänger (52) durch ein berührungsloses Verfahren zu übertragen.

5. Werkzeugmaschine (1, 1A, 1B) nach einem der Ansprüche 1 bis 4, wobei das erste Bewegungselement (53) gestaltet ist, um den Energieversorgungsteil (51) in einer Richtung senkrecht zu der ersten Achse (AX1) oder in einer Richtung parallel zu der ersten Achse (AX1) zu bewegen.

6. Werkzeugmaschine (1, 1A, 1B) nach einem der Ansprüche 1 bis 5,
wobei die Drehvorrichtung (4) einen Stützkörper (43) aufweist, der gestaltet ist, um den Drehkörper (41) drehbar um die erste Achse (AX1) zu stützen, und
wobei das erste Bewegungselement (53) durch den Stützkörper (43) der Drehvorrichtung (4) gestützt ist.

7. Werkzeugmaschine (1, 1A, 1B) nach einem der Ansprüche 1 bis 6, die des Weiteren einen Aufbewahrungsraum (6) aufweist, in dem der an der zurückgezogenen Position (P2) positionierte Energieversorgungsteil (51) aufbewahrt wird, wobei der Aufbewahrungsraum (6) Folgendes hat:
eine Öffnung (OP), durch die der Energieversorgungsteil (51) hindurchgeführt werden kann; und
einen Schließkörper (61), der gestaltet ist, um die Öffnung (OP) zu schließen.

8. Werkzeugmaschine (1, 1A, 1B) nach einem der Ansprüche 1 bis 7, die des Weiteren einen Werkzeugwechsler (7) aufweist, der gestaltet ist, um den durch den Drehkörper (41) der Drehvorrichtung (4) gehaltenen Werkzeughalter (2, 2A, 2B) gegen einen zweiten Werkzeughalter (2-2) zu wechseln,
wobei, wenn der Werkzeugwechsler (7) den Werkzeughalter (2, 2A, 2B) gegen den zweiten Werkzeughalter (2-2) wechselt, die zurückgezogene Position (P2) außerhalb eines Bereichs festgelegt ist, in dem der Werkzeugwechsler (7), der Werkzeughalter (2, 2A, 2B) und der zweite Werkzeughalter (2-2) hindurchtreten

9. Werkzeugmaschine (1, 1A, 1B) nach Anspruch 8, die des Weiteren ein Lager (8) aufweist, in dem der Werkzeughalter (2, 2A, 2B) und der zweite Werkzeughalter (2-2) untergebracht werden können, wobei das Lager (8) eine Schutzabdeckung (85) aufweist, die zumindest einen Teil der Energieaufnahmeeinrichtung (31) des Werkzeughalters (2, 2A, 2B) abdeckt.

10. Verfahren zur Bearbeitung eines Werkstücks (W), wobei das Verfahren Folgendes aufweist:
einen Schritt zum Vorbereiten eines Werkzeughalters (2, 2A, 2B), wobei der Werkzeughalter (2, 2A, 2B) Folgendes aufweist:
einen Werkzeughalteteil (22), der gestaltet ist, um ein Werkzeug (39) zu halten, wobei das Werkzeug (39) ein Reibrührschweißwerkzeug (39a) ist;
einen gehaltenen Teil (21), der durch einen Drehkörper (41) einer Drehvorrichtung (4) einer Werkzeugmaschine (1, 1A, 1B) gehalten wird;
einen freiliegenden Teil (23);
eine Energieaufnahmeeinrichtung (31), die in einem Außenumfangsrandbereich (RG) des freiliegenden Teils (23) vorgesehen ist; und
zumindest einen Sensor (34), der elektrisch mit der Energieaufnahmeeinrichtung (31) verbunden ist;
einen Schritt des Haltens des gehaltenen Teils (21) durch den Drehkörper (41) in einem Zustand, in dem der freiliegende Teil (23) von dem Drehkörper (41) freiliegt;
einen Schritt zum Bewegen eines Energieversorgungsteils (51) einer Energieversorgungseinrichtung (5) der Werkzeugmaschine (1, 1A, 1B) aus einer zurückgezogenen Position (P2) zu einer Energieversorgungsposition (P1) in einem Zustand, in dem der gehaltene Teil (21) durch den Drehkörper (41) gehalten wird, wobei die Energieversorgungsposition (P1) zu der Energieaufnahmeeinrichtung (31) zugewandt ist; und
einen Schritt zum Bearbeiten eines Werkstücks (W) unter Verwendung des durch den Werkzeughalter (2, 2A, 2B) gehaltenen Werkzeugs (39), wobei der Schritt zum Bearbeiten des Werkstücks (W) unter Verwendung des durch den Werkzeughalter (2, 2A, 2B) gehaltenen Werkzeugs (39) Folgendes aufweist:
Veranlassen der Drehvorrichtung (4), den Werkzeughalter (2, 2A, 2B) und das durch den Werkzeughalter (2, 2A, 2B) gehaltene Werkzeug (39) um eine erste Achse (AX1) zu drehen;
in einem Zustand, in dem der Werkzeughalter (2, 2A, 2B) um die erste Achse (AX1) gedreht wird, Veranlassen eines zweiten Bewegungselements (102) der Werkzeugmaschine (1, 1A, 1B), das Werkzeug (39) so zu bewegen, dass das Werkzeug (39) mit dem Werkstück (W) in Kontakt kommt;
in dem Zustand, in dem der Werkzeughalter (2, 2A, 2B) um die erste Achse (AX1) gedreht wird, Veranlassen des an der Energieversorgungsposition (P1) positionierten Energieversorgungsteils (51), Energie zu der Energieaufnahmeeinrichtung (31) zuzuführen; und
in dem Zustand, in dem der Werkzeughalter (2, 2A, 2B) um die erste Achse (AX1) gedreht wird, Veranlassen des zumindest einen Sensors (34), der durch die von der Energieaufnahmeeinrichtung (31) aufgenommenen Energie betrieben wird, eine physikalische Größe zu erfassen, die einen Zustand des Werkzeughalters (2, 2A, 2B) anzeigt, wobei
entweder, wenn der zumindest eine Sensor (34) einen Lastsensor (34a) aufweist, der gestaltet ist, um eine Last zu erfassen, die der Werkzeughalter (2, 2A, 2B) von dem Reibrührschweißwerkzeug (39a) aufnimmt, Steuern des zweiten Bewegungselements (102), so dass die durch den Lastsensor (34a) erfasste Last eine Solllast wird,
oder, wenn der Drehkörper (41) gestaltet ist, um wahlweise den Werkzeughalter (2, 2A, 2B) und einen zweiten Werkzeughalter (2-2) zu halten, in einem Zustand, in dem die Energie zu der Energieaufnahmeeinrichtung (31) des Werkzeughalters (2, 2A, 2B) von dem an der Energieversorgungsposition (P1) positionierten Energieversorgungsteil (51) zugeführt wird, Ausführen eines ersten Bearbeitungsmodus zur Bearbeitung des Werkstücks (W) unter Verwendung des durch den Werkzeughalter (2, 2A, 2B) gehaltenen Reibrührschweißwerkzeugs (39a), und in einem Zustand, in dem der Energieversorgungsteil (51) an der zurückgezogenen Position (P2) positioniert ist, Ausführen eines zweiten Bearbeitungsmodus zur Bearbeitung des Werkstücks (W) oder eines anderen Werkstücks unter Verwendung eines durch den zweiten Werkzeughalter (2-2) gehaltenen Schneidwerkzeugs (39b).

11. Verfahren zur Bearbeitung des Werkstücks nach Anspruch 10, das des Weiteren Folgendes aufweist:
einen Schritt zum Wechseln des durch den Drehkörper (41) gehaltenen Werkzeughalters (2, 2A, 2B) gegen den zweiten Werkzeughalter (2-2) oder einen Schritt zum Wechseln des durch den Drehkörper (41) gehaltenen zweiten Werkzeughalters (2-2) gegen den Werkzeughalter (2, 2A, 2B); und
einen Schritt zum Bearbeiten des Werkstücks (W) oder eines anderen Werkstücks unter Verwendung eines zweiten Werkzeugs (39-2), das durch den zweiten Werkzeughalter (2-2) gehalten wird, wobei der Schritt zum Bearbeiten des Werkstücks (W) oder des anderen Werkstücks unter Verwendung des durch den zweiten Werkzeughalter (2-2) gehaltenen zweiten Werkzeugs (39-2) in einem Zustand ausgeführt wird, in dem der Energieversorgungsteil (51) an der zurückgezogenen Position (P2) positioniert ist.

## Revendications

1. Machine-outil (1, 1A, 1B) comprenant :
un dispositif de rotation (4) comprenant un corps rotatif (41) pouvant tourner autour d'un premier axe (AX1) ;
un porte-outil (2, 2A, 2B) pouvant être fixé au corps rotatif (41) ; et
un dispositif d'alimentation électrique (5) configuré pour fournir une alimentation électrique au porte-outil (2, 2A, 2B),
le porte-outil (2, 2A, 2B) comprenant :
un récepteur d'alimentation électrique (31) disposé dans une région de bord circonférentiel extérieur (RG) du porte-outil (2, 2A, 2B) ; et
au moins un capteur (34) connecté électriquement au récepteur d'alimentation électrique (31),
le dispositif d'alimentation électrique (5) comprenant :
un élément d'alimentation électrique (51) configuré pour fournir l'alimentation électrique au récepteur d'alimentation électrique (31) ; et
un premier organe de déplacement (53) configuré pour déplacer l'élément d'alimentation électrique (51) entre une position d'alimentation électrique (P1) faisant face au récepteur d'alimentation électrique (31) et une position rétractée (P2) plus éloignée du récepteur d'alimentation électrique (31) que la position d'alimentation électrique,
**caractérisée en ce que**
l'au moins un capteur (34) est configuré pour détecter une grandeur physique indiquant un état du porte-outil (2, 2A, 2B), et
un outil (39) maintenu par le porte-outil (2, 2A, 2B) est un outil de soudage par friction-malaxage (39a),
la machine-outil (1, 1A, 1B) comprend en outre :
un organe de support de pièce à usiner (101) configuré pour supporter une pièce à usiner (W) ;
un deuxième organe de déplacement (102) configuré pour déplacer, par rapport à l'organe de support de pièce à usiner (101), le porte-outil (2, 2A, 2B) maintenu par le corps rotatif (41) du dispositif de rotation (4) ; et
un contrôleur (9) configuré pour commander le premier organe de déplacement (53), le dispositif d'alimentation électrique (5), le dispositif de rotation (4) et le deuxième organe de déplacement (102), dans laquelle
soit l'au moins un capteur (34) comprend un capteur de charge (34a) configuré pour détecter une charge que le porte-outil (2, 2A, 2B) reçoit de l'outil de soudage par friction-malaxage (39a), et le contrôleur (9) est configuré pour commander le deuxième organe de déplacement (102) de sorte que la charge détectée par le capteur de charge (34a) devienne une charge cible,
soit le corps rotatif (41) est configuré pour maintenir sélectivement le porte-outil (2, 2A, 2B) et un deuxième porte-outil (2-2), dans laquelle, dans un état dans lequel l'alimentation électrique est fournie au récepteur d'alimentation électrique (31) du porte-outil (2, 2A, 2B) depuis l'élément d'alimentation électrique (51) positionné à la position d'alimentation électrique (P1), le contrôleur (9) est configuré pour exécuter un premier mode d'usinage consistant à usiner la pièce à usiner (W) au moyen de l'outil de soudage par friction-malaxage (39a) maintenu par le porte-outil (2, 2A, 2B) et, dans un état dans lequel l'élément d'alimentation électrique (51) est positionné à la position rétractée (P2), le contrôleur (9) est configuré pour exécuter un deuxième mode d'usinage consistant à usiner la pièce à usiner (W) ou une autre pièce à usiner au moyen d'un outil de coupe (39b) maintenu par le deuxième porte-outil (2-2).

2. Machine-outil (1, 1A, 1B) selon la revendication 1, dans laquelle, lorsque l'élément d'alimentation électrique (51) est positionné à la position d'alimentation électrique (P1), l'élément d'alimentation électrique (51) est configuré pour fournir l'alimentation électrique au récepteur d'alimentation électrique (31) du porte-outil (2, 2A, 2B) par un procédé sans contact.

3. Machine-outil (1, 1A, 1B) selon la revendication 1 ou 2,
dans laquelle le porte-outil (2, 2A, 2B) comprend un émetteur (35) disposé au niveau du récepteur d'alimentation électrique (31) ou à proximité du récepteur d'alimentation électrique (31) dans la région de bord circonférentiel extérieur (RG),
dans laquelle le dispositif d'alimentation électrique (5) comprend un récepteur de signaux (52) disposé au niveau de l'élément d'alimentation électrique (51) ou à proximité de l'élément d'alimentation électrique (51),
dans laquelle l'au moins un capteur (34) est configuré pour transmettre un signal de capteur à l'émetteur (35), et
dans laquelle l'émetteur (35) est configuré pour transmettre le signal de capteur au récepteur de signaux (52).

4. Machine-outil (1, 1A, 1B) selon la revendication 3, dans laquelle, lorsque l'élément d'alimentation électrique (51) est positionné à la position d'alimentation électrique (P1), l'émetteur (35) est configuré pour transmettre le signal de capteur au récepteur de signaux (52) par un procédé sans contact.

5. Machine-outil (1, 1A, 1B) selon l'une quelconque des revendications 1 à 4, dans laquelle le premier organe de déplacement (53) est configuré pour déplacer l'élément d'alimentation électrique (51) dans une direction perpendiculaire au premier axe (AX1) ou dans une direction parallèle au premier axe (AX1).

6. Machine-outil (1, 1A, 1B) selon l'une quelconque des revendications 1 à 5, dans laquelle le dispositif de rotation (4) comprend un corps de support (43) configuré pour supporter le corps rotatif (41) de manière rotative autour du premier axe (AX1), et
dans laquelle le premier organe de déplacement (53) est supporté par le corps de support (43) du dispositif de rotation (4).

7. Machine-outil (1, 1A, 1B) selon l'une quelconque des revendications 1 à 6, comprenant en outre un logement (6) dans lequel est logé l'élément d'alimentation électrique (51) positionné à la position rétractée (P2), le logement (6) présentant :
une ouverture (OP) par laquelle peut passer l'élément d'alimentation électrique (51) ; et
un corps de fermeture (61) configuré pour fermer l'ouverture (OP).

8. Machine-outil (1, 1A, 1B) selon l'une quelconque des revendications 1 à 7, comprenant en outre un échangeur d'outil (7) configuré pour échanger le porte-outil (2, 2A, 2B) maintenu par le corps rotatif (41) du dispositif de rotation (4) pour un deuxième porte-outil (2-2),
dans laquelle, lorsque l'échangeur d'outil (7) échange le porte-outil (2, 2A, 2B) pour le deuxième porte-outil (2-2), la position rétractée (P2) est définie en dehors d'une région dans laquelle passent l'échangeur d'outil (7), le porte-outil (2, 2A, 2B) et le deuxième porte-outil (2-2).

9. Machine-outil (1, 1A, 1B) selon la revendication 8, comprenant en outre un système de stockage (8) dans lequel peuvent être stockés le porte-outil (2, 2A, 2B) et le deuxième porte-outil (2-2), le système de stockage (8) comprenant un couvercle de protection (85) recouvrant au moins une partie du récepteur d'alimentation électrique (31) du porte-outil (2, 2A, 2B).

10. Procédé d'usinage d'une pièce à usiner (W), le procédé comprenant :
une étape de préparation d'un porte-outil (2, 2A, 2B), le porte-outil (2, 2A, 2B) comprenant :
un élément de maintien d'outil (22) configuré pour maintenir un outil (39), l'outil (39) étant un outil de soudage par friction-malaxage (39a) ;
un élément maintenu (21) maintenu par un corps rotatif (41) d'un dispositif de rotation (4) d'une machine outil (1, 1A, 1B) ;
un élément saillant (23) ;
un récepteur d'alimentation électrique (31) disposé dans une région de bord circonférentiel extérieur (RG) de l'élément saillant (23) ; et
au moins un capteur (34) connecté électriquement au récepteur d'alimentation électrique (31) ;
une étape de maintien de l'élément maintenu (21) par le corps rotatif (41) dans un état dans lequel l'élément saillant (23) fait saillie hors du corps rotatif (41) ;
une étape de déplacement d'un élément d'alimentation électrique (51) d'un dispositif d'alimentation électrique (5) de la machine-outil (1, 1A, 1B) depuis une position rétractée (P2) jusqu'à une position d'alimentation électrique (P1) dans un état dans lequel l'élément maintenu (21) est maintenu par le corps rotatif (41), la position d'alimentation électrique (P1) faisant face au récepteur d'alimentation électrique (31) ; et
une étape d'usinage d'une pièce à usiner (W) au moyen de l'outil (39) maintenu par le porte-outil (2, 2A, 2B), l'étape d'usinage de la pièce à usiner (W) au moyen de l'outil (39) maintenu par le porte-outil (2, 2A, 2B) comprenant :
la commande, au dispositif de rotation (4), d'entraîner en rotation le porte-outil (2, 2A, 2B) et l'outil (39) maintenu par le porte-outil (2, 2A, 2B) autour d'un premier axe (AX1) ;
dans un état dans lequel le porte-outil (2, 2A, 2B) est entraîné en rotation autour du premier axe (AX1), la commande, à un deuxième organe de déplacement (102) de la machine-outil (1, 1A, 1B), de déplacer l'outil (39) afin d'amener l'outil (39) au contact de la pièce à usiner (W) ;
dans l'état dans lequel le porte-outil (2, 2A, 2B) est entraîné en rotation autour du premier axe (AX1), la commande, à l'élément d'alimentation électrique (51) positionné à la position d'alimentation électrique (P1), de fournir une alimentation électrique au récepteur d'alimentation électrique (31) ; et
dans l'état dans lequel le porte-outil (2, 2A, 2B) est entraîné en rotation autour du premier axe (AX1), la commande, à l'au moins un capteur (34) fonctionnant grâce à l'alimentation électrique reçue du récepteur d'alimentation électrique (31), de détecter une grandeur physique indiquant un état du porte-outil (2, 2A, 2B),
soit, lorsque l'au moins un capteur (34) comprend un capteur de charge (34a) configuré pour détecter une charge que le porte-outil (2, 2A, 2B) reçoit de l'outil de soudage par friction-malaxage (39a), la commande du deuxième organe de déplacement (102) de sorte que la charge détectée par le capteur de charge (34a) devienne une charge cible,
soit, lorsque le corps rotatif (41) est configuré pour maintenir sélectivement le porte-outil (2, 2A, 2B) et un deuxième porte-outil (2-2), dans un état dans lequel l'alimentation électrique est fournie au récepteur d'alimentation électrique (31) du porte-outil (2, 2A, 2B) depuis l'élément d'alimentation électrique (51) positionné à la position d'alimentation électrique (P1), l'exécution d'un premier mode d'usinage consistant à usiner la pièce à usiner (W) au moyen de l'outil de soudage par friction-malaxage (39a) maintenu par le porte-outil (2, 2A, 2B) et, dans un état dans lequel l'élément d'alimentation électrique (51) est positionné à la position rétractée (P2), l'exécution d'un deuxième mode d'usinage consistant à usiner la pièce à usiner (W) ou une autre pièce à usiner au moyen d'un outil de coupe (39b) maintenu par le deuxième porte-outil (2-2).

11. Procédé d'usinage de la pièce à usiner selon la revendication 10, comprenant en outre :
une étape d'échange du porte-outil (2, 2A, 2B) maintenu par le corps rotatif (41) pour le deuxième porte-outil (2-2) ou une étape d'échange du deuxième porte-outil (2-2) maintenu par le corps rotatif (41) pour le porte-outil (2, 2A, 2B) ; et
une étape d'usinage de la pièce à usiner (W) ou d'une autre pièce à usiner au moyen d'un deuxième outil (39-2) maintenu par le deuxième porte-outil (2-2), l'étape d'usinage de la pièce à usiner (W) ou de l'autre pièce à usiner au moyen du deuxième outil (39-2) maintenu par le deuxième porte-outil (2-2) étant exécutée dans un état dans lequel l'élément d'alimentation électrique (51) est positionné à la position rétractée (P2).
